# EUROPEAN PATENT APPLICATION

(11) **EP 2 626 793 A1**
(43) Date of publication of application: **14.08.2013**
(21) Application number: 10858149.7
(22) Date of filing: 08.10.2010
(51) Int. Cl.: G06F 12/16

(54) **MEMORY MODULE REDUNDANCY METHOD, STORAGE PROCESSING DEVICE, AND DATA PROCESSING DEVICE**

(71) Applicant: Fujitsu Limited, Kawasaki-shi, Kanagawa 211-8588 (JP)
(72) Inventor: GOTO, Yoshitsugu, Kawasaki-shi Kanagawa 211-8588 (JP)
(74) Representative: HOFFMANN EITLE
(86) International application number: PCT/JP2010/067802
(87) International publication number: WO 2012/046343

(57) **Abstract**

A system includes one or more memory modules provided with a plurality of operation blocks having a plurality of memory elements which may be simultaneously operated. The system performs write access concurrently by writing data to two or more selected operation blocks. When a fault is detected in one of the two or more operation blocks, access is performed including the write access to two or more operation blocks excluding the operation block in which the fault is detected

## Description

### FIELD

The present invention relates to a redundancy technique using one or more memory modules each provided with a plurality of operation blocks which include a plurality of concurrently operable memory elements.

### BACKGROUND

In a data processing device such as a computer etc., semiconductor memory is used for supply of data to the CPU. The semiconductor memory is normally loaded into a data processing device as a memory module. A memory module is a printed plugboard provided with a connection terminal to which a plurality of semiconductor memory units are attached. Using the connection terminal of the printed plugboard, the memory module is plugged into a socket (slot) provided for a printed circuit board such as a mother board etc. Hereafter, the semiconductor memory used as a part of the memory module is referred to as a "memory element". The memory module is loaded with one or more memory elements which practically store data.

With the data processing device such as a server etc. which is to be highly reliable, it is conformed whether or not there is an error detected in the read data when the data is read from the memory module. When there is an error detected in the data by confirming the read data, the data is corrected.

A data error may be caused by a fault of a memory module. It is preferable that the faulty memory module is not used. However, when the faulty memory module is not used, there is no available memory module. Otherwise, there are a small number of available memory modules, and data processing is not performed at a high speed. Accordingly, a memory redundancy technique is used to overcome the fault of the memory module.

A memory redundancy method may load a plurality of memory modules connected to the same bus into a data processing device, and at least one of the memory modules is used for redundancy. In this redundancy method, when a memory module becomes faulty, a memory module for redundancy replaces the faulty memory module.

In the redundancy method above, the faulty memory module is stopped, and the memory module for redundancy which is to replaces the faulty memory module enters an operating state. The memory module for redundancy in the operating state is set depending on the faulty memory module. By the settings, the memory module for redundancy operates as a substitute for the faulty memory module.

Thus, in the redundancy method above, the memory module for redundancy connected to the identical bus is loaded with the function (special system) of enabling the replacing memory module to operate as the memory module which has become faulty. To add the function, the memory module for redundancy is specific and more expensive. Since a specific memory module raises the cost of the data processing device, it is not preferable costwise.

A fault of a memory module may generate an uncorrectable error. When the uncorrectable error occurs due to the fault of the memory module, the data stored in the faulty memory module is lost. If the data is lost, data processing is not continued. In the redundancy method above, the memory module for redundancy replaces the faulty memory module when the fault of the memory module occurs. The memory module for redundancy is not used for the redundancy the memory module before the fault. Therefore, the redundancy method does not correspond to the lost data. Accordingly, the redundancy of the memory which may correspond to the lost data is to be performed.

Another redundancy method for a memory module corresponding to the lost data obtain duplex memory by providing a memory module loaded with a redundancy memory element for each memory element so that the same data is stored in each memory element. Thus, in the redundancy method, lost data due to a fault may be compensated for.

A memory element for redundancy configures a memory module with the corresponding memory element. With the duplex configuration, the memory module has a function of selecting an active memory element in the duplex memory elements. However, the memory module having the additional function is specific. Therefore, the other redundancy method also has the problem of a high cost of a data processing device.

### Documents of Prior Art

### Patent Document

Patent Document 1: Japanese Laid-open Patent Publication No. 8-227394
Patent Document 2: Japanese Laid-open Patent Publication No. 2009-181425

### SUMMARY

One system according to the present invention aims at providing the technique of realizing the redundancy of a memory module corresponding to the data lost by a fault while suppressing the raise of the cost of the data processing device.

One system according to the present invention includes: a fault detection device which detects for each operation block a fault occurring in a memory module including a plurality of operation blocks having a plurality of memory elements which may be simultaneously operated; an access execution device which concurrently performs write access by writing data to two or more operation blocks to be accessed using two or more operation blocks selected from one or more memory modules as a unit to be accessed; and an access restriction device which restricts access including the write access by the access execution device to at least one operation block excluding an operation block in which a fault is detected among the two or more operation blocks when the fault is detected by the fault detection device in one of the two or more operation blocks to be accessed.

One system according to the present invention may realize the redundancy of a memory module corresponding to the loss of data by a fault while suppressing the increase of the cost of a data processing device.

### BRIEF DESCRIPTION OF DRAWINGS

FIG. 1A is an explanatory view (1) of the configuration of a conventional computer system using an SDRAM module;
FIG. 1B is an explanatory view (2) of the configuration of a conventional computer system using an SDRAM module;
FIG. 1C is an explanatory view (3) of the configuration of a conventional computer system using an SDRAM module;
FIG. 2 is an explanatory view of the configuration of an SDRAM module;
FIG. 3 is an explanatory view of the configuration of address data;
FIG. 4 is an explanatory view of the configuration of an operation code;
FIG. 5 is an explanatory view of the contents indicated by each type of fault information;
FIG. 6 is an explanatory view of the configuration and the operation of a CS address conversion circuit;
FIG. 7 is a flowchart of an example of the flow of the controlling process performed by a storage processing device for a memory patrol;
FIG. 8A is an explanatory view (1) of the configuration of a printed plugboard implemented with the storage processing device according to the first embodiment;
FIG. 8B is an explanatory view (2) of the configuration of a printed plugboard implemented with the storage processing device according to the first embodiment;
FIG. 9 is an explanatory view of the configuration of the CS address conversion circuit according to the first embodiment of the present invention;
FIG. 10 is an explanatory view of the contents indicated by each type of fault information according to the first embodiment of the present invention;
FIG. 11 is an explanatory view of the operation of the CS address conversion circuit according to the first embodiment of the present invention;
FIG. 12A is a timing chart indicating the operation of the SDRAM module when redundancy is inactive, and a flowchart of a blend process (during write access);
FIG. 12B is a timing chart indicating the operation of the SDRAM module when redundancy is inactive, and a flowchart of a blend process (during read access);
FIG. 13A is a timing chart indicating the operation of the SDRAM module when redundancy is active, and a flowchart of a blend process (during write access);
FIG. 13B is a timing chart indicating the operation of the SDRAM module when redundancy is active, and a flowchart of a blend process (during read access);
FIG. 14 is a flowchart of an example of the flow of the controlling process performed by the storage processing device according to the first embodiment for a memory patrol;
FIG. 15A is an explanatory view (1) of the configuration of a printed plugboard implemented with the storage processing device according to the second embodiment;
FIG. 15B is an explanatory view (2) of the configuration of a printed plugboard implemented with the storage processing device according to the second embodiment;
FIG. 15C is an explanatory view (3) of the configuration of a printed plugboard implemented with the storage processing device according to the second embodiment;
FIG. 16 is an explanatory view of the configuration of the CS address conversion circuit according to the second embodiment of the present invention;
FIG. 17 is an explanatory view of the configuration of a write conversion circuit;
FIG. 18 is an explanatory view of the configuration of a read conversion circuit;
FIG. 19 is an explanatory view of the meaning of each type of fixed information according to the second embodiment of the present invention;
FIG. 20 is an explanatory view of the operation of the CS address conversion circuit according to the second embodiment of the present invention;
FIG. 21 is a flowchart of an example of the flow of the controlling process performed by the storage processing device according to the second embodiment for a memory patrol;
FIG. 22A is an explanatory view (1) of the configuration of the computer system to which the storage processing device according to the third embodiment is applied;
FIG. 22B is an explanatory view (2) of the configuration of the computer system to which the storage processing device according to the third embodiment is applied; and
FIG. 22C is an explanatory view (3) of the configuration of the computer system to which the storage processing device according to the third embodiment is applied.

### DESCRIPTION OF EMBODIMENTS

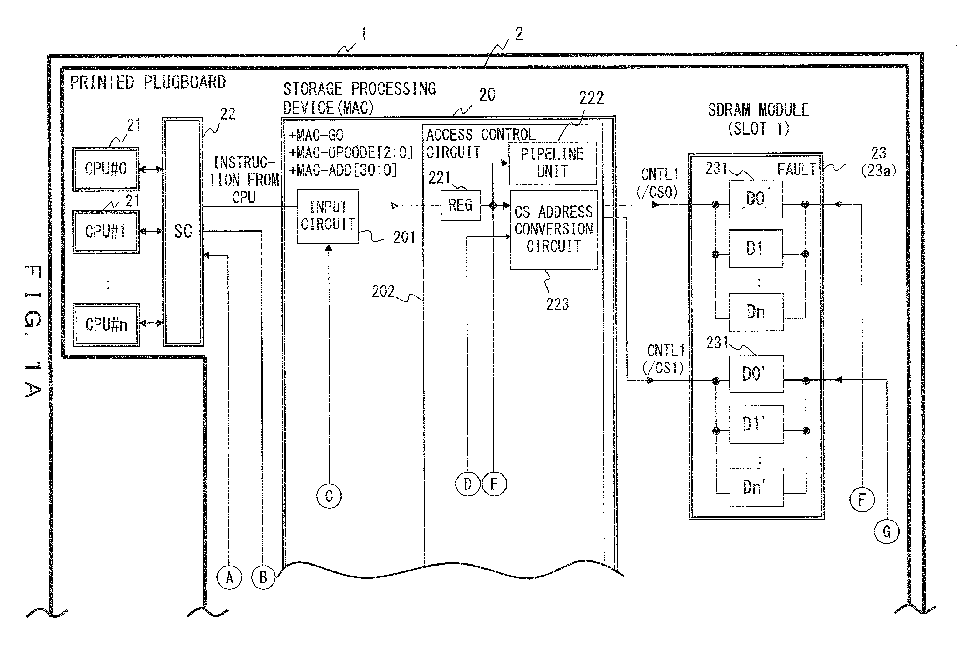

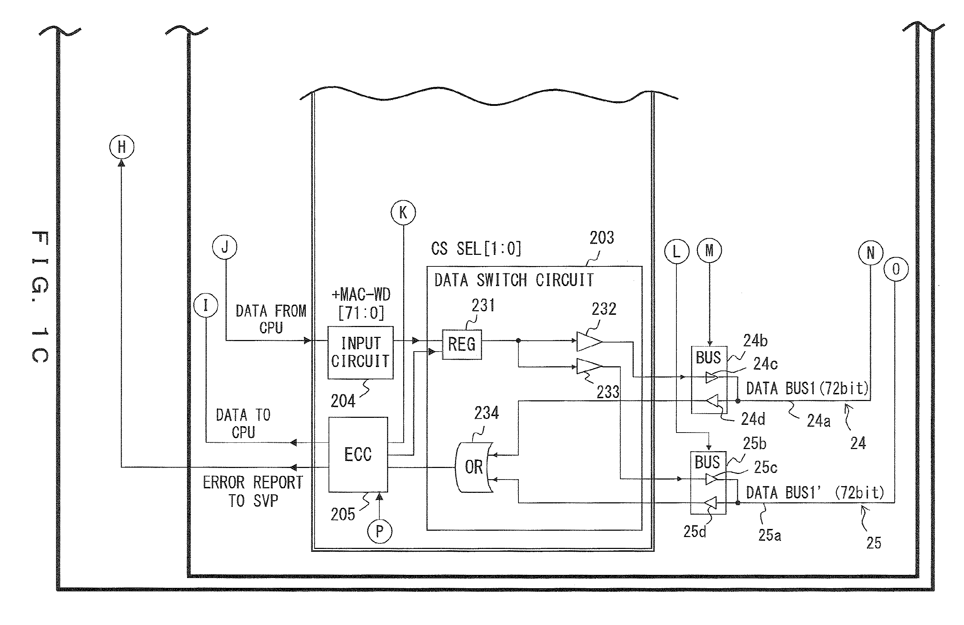

The memory module currently used in the data processing device such as a computer etc. is a standard SDRAM (synchronous DRAM) module. A DIMM (dual inline memory module) is a dominant memory module. First, the configuration of the computer (data processing device) system when a normal SDRAM module is used, and an example of the redundancy using an SDRAM module are concretely described below with reference to FIGS. 1A through 7.

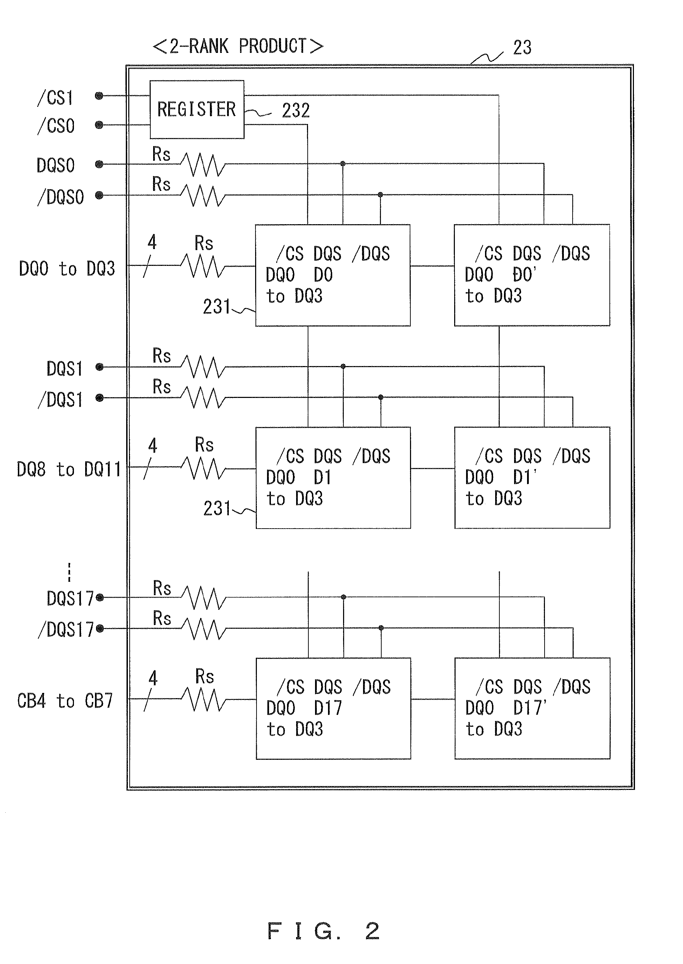

FIGS. 1A through 1C are explanatory views of the configuration of the computer system using the SDRAM module. FIG. 2 is an explanatory view of the configuration of the SDRAM module.

An SDRAM module 23 illustrated in FIG. 2 is in accordance with the JEDEC (Joint Electron Device Engineering Council). In the SDRAM module 23, memory elements 231 which input or output data in 4-bit units are put in two 18-element groups (ranks). A rank is an operation block (operation configuration unit) in operating the memory element 231 on the SDRAM module 23, that is, a group of memory elements 231 which may be simultaneously operated. The SDRAM module 23 may be operated in each rank. In the example illustrated in FIG. 2, the memory element 231 marked with any of "D0" through "D17" belongs to a rank 0, and the memory element 231 marked with any of "D0'" through "D17'" belongs to a rank 1. In the 18 memory elements 231 which belong to one rank, 16 elements are used to store data, and 2 elements are used to store ECC (error-correction coding) data. Each rank may input or output 64 (=4x16) bit data.

The memory element 231 is provided with a memory cell array for storing data. In many cases, 1 memory element is 1 memory chip. To refer to a specific memory element, "D0" etc. is used as a code instead of "231".

To 18 memory elements 231 which belong to the same rank, the identical chip select signal is supplied externally from the SDRAM module 23. The chip select signal selectively operates the memory element 231 configuring the SDRAM module 23 for each rank. A register 232 supplies the chip select signal to each rank. "/CS0" and "/GS1" in FIG. 2 refers to the chip select signal. /CSO is used for the rank 0, and /CS1 is used for the rank 1.

"DQS" and "/DQS" in FIG. 2 refer to the data strobe signal. The numerals subsequent to the "DQS" and "/DQS" indicate the memory element 231 to which the data strobe signal is input. For example, "DQS0 refers to the data strobe signal DQS to be input to the memory element D0 and D0'. "DQ" refers to a data signal, and "CB" refers to an ECC data signal. The subsequent numerals refer to the parts corresponding to the respective signals in the data or the entire ECC data. In FIG. 2, for example, "DQ0 to D3" refers to the data at bits 0 through 3 in the 64 bit data signal, and the data signals at the 0th through third bits are input to the memory element D0 and/or D0' "CB4 to CB7" refers to the ECC data signal at the 5th through 8th bits in the 8 bit ECC data signal, and the 5th through 8th bits of the ECC data signal may be input tp the memory element D17 and/or D17'. Although not illustrated in the attached drawings, the identical address signal is input to the corresponding memory element 231 in each rank. A computer system 1 illustrated in FIGS. 1A through 1C adopts the SDRAM module 23 illustrated in FIG. 2 as a memory module. The computer system 1 illustrated in FIGS. 1A through 1C includes a printed plugboard 2 to which two SDRAM modules 23 illustrated in FIG. 2 are attached, a console 3, and an external control unit 4. The printed plugboard 2 illustrated in FIGS. 1A through 1C is a mother board loaded into the computer body configuring, for example, the computer system 1.

One of two SDRAM modules 23 loaded into the printed plugboard 2 is set as a standby unit, that is, a redundancy unit. Each SDRAM module 23 is used in each rank. In this example, it is assumed that a standby SDRAM module is an SDRAM module 23b, and a normally used SDRAM module is a SDRAM module 23a. The standby SDRAM module 23b is hereafter referred to also as a "redundancy SDRAM module 23b". The slot into which the SDRAM module 23a is inserted is expressed as a slot 1, and the slot into which the SDRAM module 23b is inserted is expressed as a slot 1'.

The external control unit 4 is prepared separately from the computer body, and controls the computer system 1. The console 3 operated by an operator is connected to the external control unit 4. The external control unit 4 includes an SPC (system power controller) 41, an SVP (service processor) 42, and an SCI (system console interface) 43.

The SPC 41 manages the power supply of the entire computer system 1. The SVP 42 is, for example, a computer, and processes an instruction output from the console 3. The SCI 43 communicates (relays) an instruction, data, etc. with the SVP 42 and the computer body.

A plurality of CPUs 21 are implemented on the printed plugboard 2. Each CPU 21 is connected to an SC (system controller) 22. The SC 22 is also connected to a storage processing device (MAC (memory access controller)) 20. The storage processing device 20 is connected to each SDRAM module 23.

The SC 22 controls necessary data transfer for the connected CPU 21. The storage processing device 20 positioned between the SC 22 and the SDRAM module 23 receives an instruction from the CPU 21 through the SC 22, and accesses the SDRAM module 23 according to the received instruction. At the instruction received from the CPU, the storage processing device 20 writes data to the SDRAM module 23 or reads data from the SDRAM module 23. The storage processing device 20 transfers the data obtained by the read access to the SC 22.

The instruction output from the SC 22 is input to an input circuit 201 of the storage processing device 20, and output to an access control circuit 202 which controls access to a memory module. The instruction output from the input circuit 201 to the access control circuit 202 is stored in a register 221, and output to a pipeline unit 222, a CS address conversion circuit 223, and a memory access control circuit 224 through the register 221. The pipeline unit 222 holds a specified number of latest instructions. The CS address conversion circuit 223 generates a chip select signal to be supplied to the SDRAM module 23. The memory access control circuit 224 generates a signal (hereafter referred to as an "address signal") for specification of the address of the SDRAM module 23 to be accessed. The address signal may be a row address signal for specification of a row address, a column address signal for specification of a column address, and a bank address signal for specification of a bank.

The instruction output from the SC 22 to the storage processing device 20 includes activation data for activation of the storage processing device 20, an operation code indicating the type of instruction, address data indicating the access position in the SDRAM module 23. The activation data is assigned 1 bit, the operation code is assigned 3 bits, and the address data is assigned 31 bits. The instructions including all data are output to the pipeline unit 222. The activation data, the operation code, and a part of address data are output to the CS address conversion circuit 223. The remaining address data is output to the memory access control circuit 224. In FIG. 1A, "+MAC-GO" indicates an activation signal, "+MAC-OPCODE [2:0]" indicates an operation code, and "+MAC-ADD [30:0]" indicates address data.

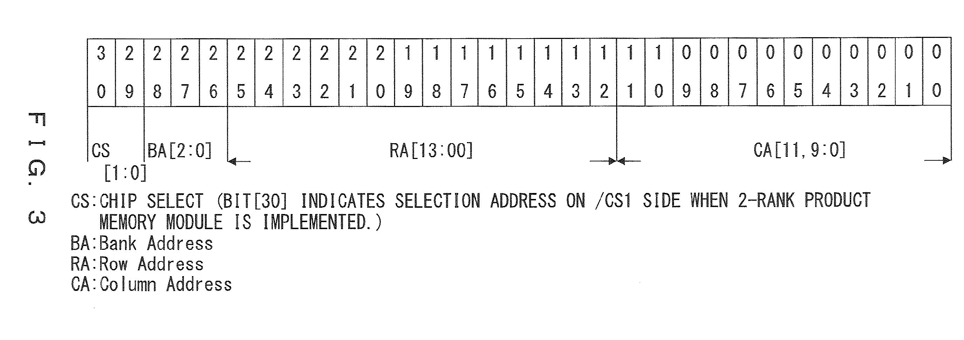

FIG. 3 is an explanatory view of the configuration of address data. As illustrated in FIG. 3, the address data includes 14-bit row address data (RA [13:00]) for specification of a row address, 12-bit column address data (CA [11, 9:0]) for specification of a column address, 3-bit bank address data (BA [2:0]) for specification of a bank, and 2-bit chip select data (CS [1:0]).

The bit 10 (CA[10]) as the 10th bit of the column address data is assigned to the precharge instruction for transition to the state (precharge state) before starting the operation at another column address after the operation of the current column address. Thus, "CA [11, 9:0] " expressed in FIG. 3 indicates that 11 bits excluding the bit 10 are practically used for specification of the column address in the column address data. The column address data is assigned to the bits 0 through 11 of the address data. Similarly, "RA [13:00] " expressed in FIG. 3 indicates that all of 14 bits of the row address data are used for specification of the row address. The row address data is assigned to the bits 12 through 25 of the address data. "BA [2:0]" indicates that all of 3 bits of the bank address data are used for specification of the bank address. The bank address data is assigned to the bits 26 through 28 of the address data. "CS" and the expressed 2-bit chip select data are assigned to the remaining bits of the address data, that is, the bits 29 and 30 of the address data. The data of the bits 29 and 30 is used for specification of selection/non-selection of the corresponding rank. For example, the data of the bit 29 is associated with the rank 0, the data of the bit 30 is associated with the rank 1, the value of 0 specifies non-selection, and the value of 1 specifies selection. Hereafter, when a target bit is specified, the notation of describing the numerals indicating target bits in parentheses preceded by a symbol string indicating data is used. For example, the data of the bits 0 through 9 of the column address data is expressed by "column address data CA [9:0]". "CS-ADD" of the chip select data is used as a symbol string is used as a symbol string for distinction from the chip select signal.

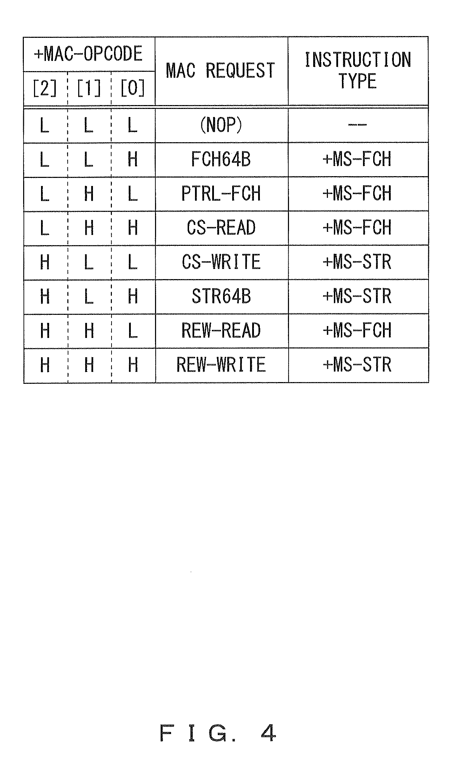

FIG. 4 is an explanatory view of the type of instruction indicated by an operation code. "[0]" through " [2] " expressed in FIG. 4 indicate each bit of an operation code (+ MAC-OPCODE). "L" and "H" of the operation code indicate the signal level of the corresponding bit, that is, the logical value of 0 or 1. L corresponds to the logical value of 0, and L corresponds to the logical value of 1. Hereafter, the logical value is referred to as a "value" for short.

"MAC REQUEST" expressed in FIG. 4 indicates the type of operation requested by an operation code + MAC-OPCODE. FIG. 4 illustrates the type of information of the operation code + MAC-OPCODE and the type of operation requested by the operation code + MAC-OPCODE for each combination of the values of the bits 0 through 2 of the operation code + MAC-OPCODE.

FIG. 4 illustrates "+MS-FCH" and "+MS-STR". "+MS-FCH" indicates a data read instruction. "+MS-STR" indicates a data write instruction.

FIG. 4 illustrates "FCH64B", "PTRL-FCH", "CS-READ", "CS-WRITE", "STR64B", "REW-READ", and "REW-WRITE" as the character strings indicating the types of operations. Each of them indicates the following operations

'"STR64B" indicates the read access for reading 64-bit data. In the rank 1 of the SDRAM module 23 as described above, two memory elements 231 are used to store ECC data. The memory module which stores the ECC data periodically performs a memory patrol for detection of a fault. "PTRL-FCH" indicates read access in the memory patrol.

"STR64B" indicates write access for a 64-bit data write.
"REW-READ" indicates read access to be performed again when a correctable error is detected. Similarly, "REW-WRITE" indicates write access to be performed after read access "REW-READ" when a correctable error is detected.

When a correctable error constantly occurs (fixed fault) at the same point of a memory element, the data of the rank including the memory element in which the fault has occurred is copied to the same SDRAM module 23 in another rank or to another SDRAM module 23. "CS-READ" and "CS-WRITE" respectively indicate read access and write access for copy processing.

"NOP" in FIG. 4 indicates no operation.
The memory patrol described above is performed using, for example, a JTAG (joint test action group). The instruction to execute a memory patrol is generated and output by an SVP 42 by operating the console 3. The instruction output by the SVP 42 is input to an SVP control unit 206 through an SCI 43 and processed. The SVP control unit 206 processes an instruction output by the SVP 42, and corresponds to the JTAG. When the SVP 42 outputs an instruction for a memory patrol, the SVP control unit 206 controls the input circuit 201 and realizes the memory patrol using the access control circuit 202.

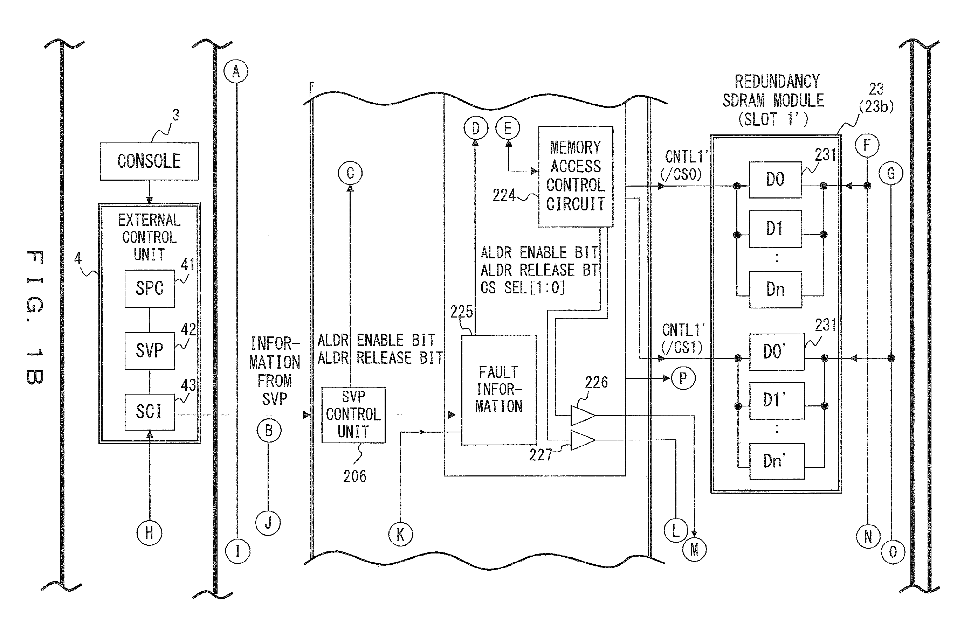

The CS address conversion circuit 223 generates a chip select signal using activation data + MAC-GO, operation code + MAC-OPCODE, and plural pieces of fault information about the faults of the SDRAM module 23. "CNTL1 (/CSO)", "CNTL1 (/CS1)", "CNTL1' (/CSO)", and "CNTL1' (/CS1)" expressed in FIG. 1A or 1B indicate a chip select signal. "CNTL1 (/CSO)" indicates a chip select signal for selection of the rank 0 of the SDRAM module 23a. Similarly, "CNTL1 (/CS1)" indicates a chip select signal for selection of the rank 1 of the SDRAM module 23a, "CNTL1' (/CSO) indicates a chip select signal for selection of the rank 0 of the SDRAM module 23b, "CNTL1' (/CS1)" indicates a chip select signal for selection of the rank 1 of the SDRAM module 23b. Each chip select signal is output for the corresponding rank. "CS SEL [1:0]", "ALDR ENABLE BIT", and "ALDR RELEASE BIT" expressed in FIG. 1B indicate the respective fault information.

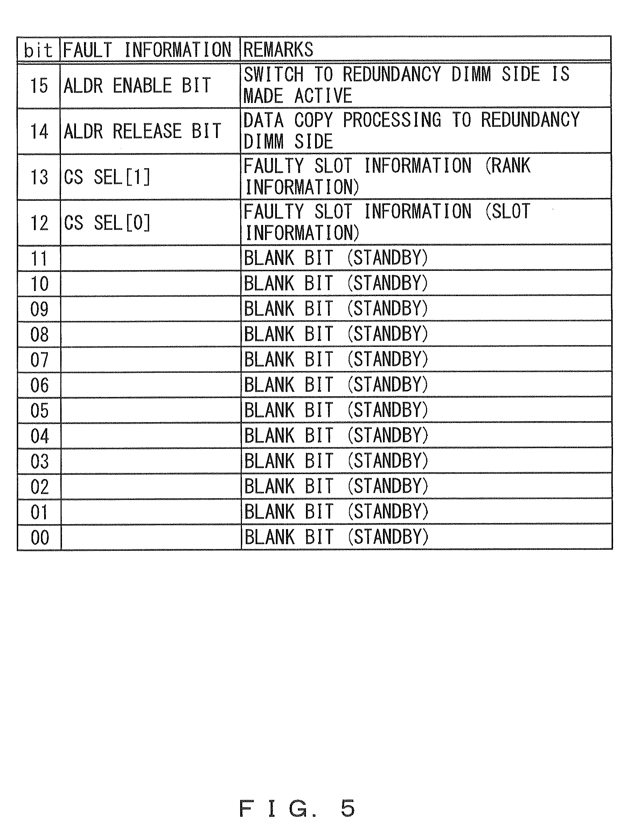

FIG. 5 is an explanatory view of the contents of the various types of fault information. The various types of fault information may be fault information CS SEL [1:0], fault information ALDR ENABLE BIT, and fault information ALDR RELEASE BIT as illustrated in FIG. 5. It is assumed that the entire fault information is assigned the amount of information of 16 bits. The fault information CS SEL [1:0] is assigned as the information at bits 12 through 13. Similarly, the fault information ALDR ENABLE BIT is assigned as the information at bit 15, and the fault information ALDR RELEASE BIT is assigned as the information at bit 14. The bits 0 through 11 are unused.

As illustrated in FIG. 5, the fault information CS SEL [1:0] indicates the position where the fault has been detected. To be more concrete, the fault information CS SEL [0] refers to the SDRAM module 23 where the fault has been detected. For example, when CS SEL [0] is "0", it is indicated that the faulty SDRAM module is the SDRAM module 23a inserted into the slot 1. If the value is "1" , it is indicated that the faulty SDRAM module is the SDRAM module 23b inserted into the slot 1'. The fault information CS SEL [1] refers to the rank in which the fault in the SDRAM module indicated by the CS SEL has been detected. If the value of CS SEL [1] is "0", it indicates that the rank in which the fault has been detected is the rank 0. If the value is 1, it indicates that the rank in which the fault has been detected is the rank 1.

The fault information ALDR ENABLE BIT indicates whether or not the switch to a standby SDRAM module (expressed as "redundancy DIMM" in FIG. 5) is active. The standby SDRAM module is the redundancy SDRAM module 23b inserted into, for example, the slot 1'. The value of 1 indicates that the switch to the redundancy SDRAM module 23b is active, and when the value of the fault information ALDR ENABLE BIT is 0, it indicates that the switch to the redundancy SDRAM module 23b is inactive. The switch to the redundancy SDRAM module 23b is performed when a correctable error is continuously detected in the rank of the SDRAM module 23a. When a correctable error is continuously detected, it is assumed that fixed fault has occurred.

In switching to the redundancy SDRAM module 23b, the data stored in the rank in which the fixed fault has occurred is copied to another position. Whether or not the data copy processing which accompanies the switch to the redundancy SDRAM module 23b is expressed by the fault information ALDR RELEASE BIT. When the value of the fault information ALDR RELEASE BIT is 1, it indicates that the data copy processing (repetitive performance of CS-READ and CS-WRITE).

When the CS address conversion circuit 223 accesses the SDRAM module 23, one of the four types of chip select signals is made to be active. The address signal generated by the memory access control circuit 224 is output to each rank of each SDRAM module 23. As a result, access is performed to the rank of the SDRAM module 23 to which the active chip select signal is output. When the access is read access, 72-bit data is read from the SDRAM module 23, and input to a data switch circuit 203 through a data bus 24 or 25. When the data is read from the slot 1, the data is input to the data switch circuit 203 through the data bus 24 regardless of the SDRAM module 23 from which the data is read. Similarly, when data is read from the slot 1', the data is input to the data switch circuit 203 through the data bus 25 regardless of the SDRAM module 23 from which the data is read.

The data buses 24 and 25 are bidirectional buses, and an active direction is selected depending on the value of selection information +WR-SEL stored in buffers 226 and 227 managed by the memory access control circuit 224.

For example, the selection information +WR-SEL is 1-bit information for selection of an active direction for the data buses 24 and 25. For example, if the value of the selection information +WR-SEL is 0, data output from the data switch circuit 203 to each SDRAM module 23 becomes active. If the value of the selection information +WR-SEL is 1, the data output from each 23 to the data switch circuit 203 becomes active. Therefore, during read access, the value of the selection information +WR-SEL is set to 1, and the value of the selection information +WR-SEL is set to 0 during write access.

The data bus 24 is provided with a signal line group 24a and a bus buffer 24b connected to the rank 0 of each SDRAM module 23. The bus buffer 24b is provided with a buffer 24c connected to a buffer 232 of the data switch circuit 203 and a buffer 24d connected to an OR gate group 234 of the data switch circuit 203. If the value of the selection information +WR-SEL is 0, the buffer 24c stores the data output by the buffer 232 of the data switch circuit 203. If the value of the selection information +WR-SEL is 1, the buffer 24d stores the data output from any SDRAM module 23. As a result, if the value of the selection information +WR-SEL is 1, only the data output from the data switch circuit 203 to each SDRAM module 23 is active. If the value of the selection information +WR-SEL is 0, only the data output from each SDRAM module 23 to the data switch circuit 203 is active. The data bus 24 makes only one direction active by the operation of the bus buffer 24b depending on the value of the selection information +WR-SEL.

Similarly, the data bus 25 is provided with a signal line group 25a and a bus buffer 25b connected to the rank 1 of each SDRAM module 23. Similarly, the bus buffer 25b is provided with a buffer 25c connected to the buffer 232 of the data switch circuit 203 and a buffer 25d connected to the OR gate group 234 of the data switch circuit 203. If the value of the selection information +WR-SEL is 0, the buffer 25c stores the data output by the buffer 232 of the data switch circuit 203. If the value of the selection information +WR-SEL is 1, the buffer 25d stores the data output from any SDRAM module 23. As a result, when the value of the selection information +WR-SEL is 1, only the data output from the data switch circuit 203 to each SDRAM module 23 is active. When the value of the selection information +WR-SEL is 0, only the data output from each SDRAM module 23 to the data switch circuit 203 is active. The data bus 25 makes only one direction active by the operation of the bus buffer 25b depending on the value of the selection information +WR-SEL.

The read data output to the data switch circuit 203 through the data bus 24 or 25 is input to the OR gate group 234. The OR gate group 234 calculates for each bit the logical sum of the data input from the data buses 24 and 25, and outputs the calculation result as the data read from the SDRAM module 23. Since only one of the four chip select signals is active, the calculation result of the OR gate group 234 matches the data read from the rank of the SDRAM module 23 which is active according to the chip select signal.

The data output from the OR gate group 234 is input to an ECC unit 205, and the ECC unit 205 checks the data using the ECC data in the output data. When no error is detected in the data as a result of the check, the ECC unit 205 outputs the input data to the SC 22.

On the other hand, when a correctable error is detected as a result of the check, the ECC unit 205 corrects the detected error, and outputs the corrected data to the SC 22. In addition, the ECC unit outputs to the external control unit 4 an error report as a message that a correctable error has occurred. The error report from the ECC unit is input to the SVP 42 through an SC 143. During the execution of a memory patrol, the error report is processed by the SVP 42.

The error that has been detected does not always continuously occur at the same storage position, that is, at the same address in the same rank of the SDRAM module 23. There is the possibility that the contents of the data stored in a certain storage position, or the data read from the storage position have been changed. Therefore, the occurrence of the error is not always caused by a fixed fault. Thus, for example, the SVP 42 instructs the SVP control unit 206 to re-read (REW-READ) the same data when the first error is detected.

When an uncorrectable error is detected, the ECC unit 205 outputs an error report of the detection to the external control unit 4. The error report from the ECC unit 205 is input to the SVP 42 through the SC 143. After inputting the error report, the SVP 42 outputs (for example, displays) the contents of the error report to the console 3 automatically or at the instruction of an operator. Thus, the operator of the console 3 recognizes the generation of an uncorrectable error, and handles the error.

Upon receipt of the re-read instruction, the SVP control unit 206 stops patrol access. The SVP control unit 206 also instructs the access control circuit 202 to re-read data from the storage position where the erroneous data was read (REW-READ). The read at the instruction from the SVP control unit 206 is performed using the instruction stored in the pipeline unit 222. By re-reading the data, the ECC unit 205 detects an error again, and corrects as necessary the data in which the error has been detected. The data corrected as necessary is written to the start point where the data was read (REW-WRITE). The write of data is performed by output the data, for example, from the ECC unit 205 to the data switch circuit 203. In addition, when an error is detected again from the data read from the same storage position as the data from which the error has been detected, that is, when the ECC unit 205 outputs an error report again, the SC 22 assumes that a fixed fault has occurred.

On the other hand, unless the ECC unit 205 detects an error as a result of the data re-read, the SVP 42 assumes that no fixed fault occurs, and resumes the memory patrol.

Thus, when an error is detected, the error is corrected, and the data written to a memory element is re-read and the ECC unit 205 is allowed to detect an error, thereby confirming whether or not a fixed fault has occurred in the storage position where the data is written.

In addition to the above-mentioned error report, the ECC unit 205 generates the fault information CS SEL [1:0] and outputs it to a fault information storage unit 225. The ECC unit 205 refers to each chip select signal output by the CS address conversion circuit 223, thereby generating the fault information CS SEL [1:0] according to an active chip select signal. The fault information CS SEL [1:0] generated by the ECC unit 205 indicates the SDRAM module 23 from which the data including the correctable error has been read, and the rank.

The information about the generation position of the error is also included in the error report from the ECC unit 205. The SVP 42 displays on the console 3 the contents of the error report input from the ECC unit 205 again automatically or at an instruction of the operator. Thus, the operator operates the console 3, and sets the fault information ALDR RELEASE BIT and ALDR RELEASE BIT based on the contents of the displayed error report. The set fault information ALDR RELEASE BIT and ALDR RELEASE BIT are output from the SVP 42, and input to the fault information storage unit 225 through the SCI 43 and the SVP control unit 206. The fault information storage unit 225 stores, in addition to the fault information CS SEL [1: 0] output from the ECC unit 205, the fault information ALDR ENABLE BIT and ALDR RELEASE BIT. These pieces of fault information are input to the CS address conversion circuit 223, and are reflected by the generation of a chip select signal by the CS address conversion circuit 223.

When a fixed fault is detected, for example, "0" is set as an initial value of the fault information ALDR ENABLE BIT in the fault information because it is not active to switch to the redundancy SDRAM module 23b when a fixed fault occurs. To be more concrete, the data copy processing described later to store necessary data in the redundancy SDRAM module 23b has to access the SDRAM module 23a in which the fixed fault has occurred. The value of the fault information ALDR RELEASE BIT may be, for example, "1" as an initial value.

After storing these pieces of fault information in the fault information storage unit 225, the SVP control unit 206 allows the access control circuit 202 to perform the data copy processing of storing in the SDRAM module 23b the data of the SDRAM module 23a in which the fixed fault has occurred. The instruction to direct the access control circuit 202 to perform the data copy processing, that is, the instruction to operate the access control circuit 202, is generated by the input circuit 201 under the control of the SVP control unit 206. After completion of the data copy processing, the operator operates the console 3 to change the value of the fault information ALDR RELEASE BIT from 1 to 0, and the value of the fault information ALDR ENABLE BIT from 0 to 1. By the change of the fault information ALDR ENABLE BIT, redundancy switching is performed, and the access control circuit 202 hereafter accesses only the redundancy SDRAM module 23b.

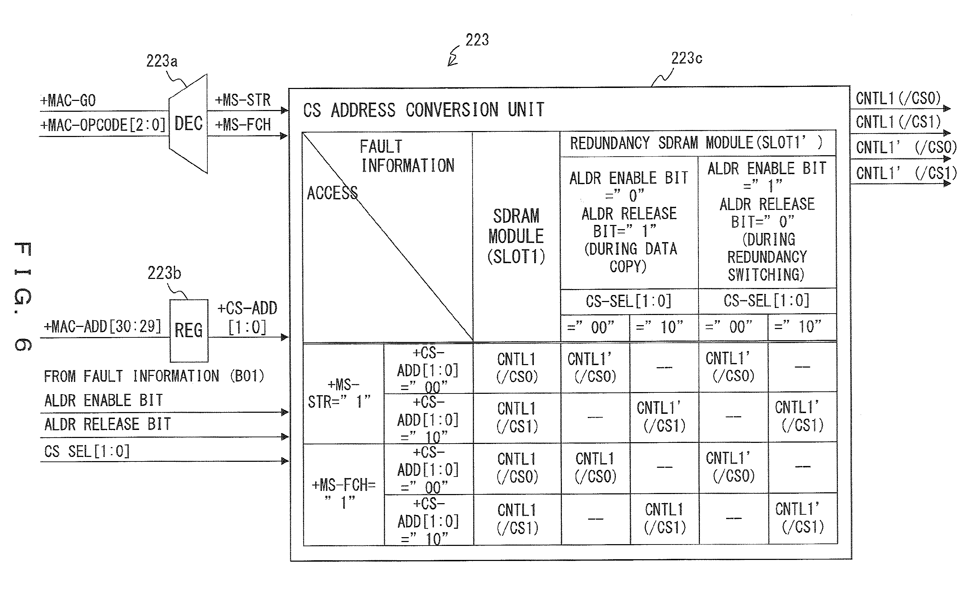

FIG. 6 is an explanatory view of the configuration and operation of the CS address conversion circuit. As illustrated in FIG. 6, the CS address conversion circuit 223 includes a decoder 223a, a register 223b, and a CS address conversion unit. The decoder 223a receives the activation data + MAC-GO and the operation code + MAC-OPCODE. When the activation data + MAC-GO is active, the decoder 223a decodes the operation code + MAC-OPCODE, and makes active one of the instructions +MS-STR and +MS-FCH, that is, sets the value to 1. Each of the instructions +MS-STR and +MS-FCH is supplied to the CS address conversion unit 223c through a separate signal line.

The address data +MAC-ADD [30:29], that is, the chip select data +CS-ADD [1:0], is supplied to the CS address conversion unit 223c through the register 223b. The fault information ALDR ENABLE BIT, ALDR RELEASE BIT, and CS SEL [1:0] are supplied to the CS address conversion unit 223c through the fault information storage unit 225 as illustrated in FIGS. 1A and 1B.

The CS address conversion unit 223c generates a chip select signal depending on the value of each of the input signals. By generating a chip select signal, the CS address conversion unit 223c makes active one of the "CNTL1 (/CSO)", "CNTL1 (/CS1) " , "CNTL1' (/CSO)", and "CNTL1' (/CS1) " expressed as a chip select signal in FIG. 6 (and FIG. 1A or 1B). In FIG. 6, the table illustrated in the CS address conversion unit 223c is a conversion table indicating the chip select signals which are active according to the contents of various types of information received by the CS address conversion unit 223c.

'+CS-ADD [1:0] = "00"' indicates that the rank 0 of the SDRAM module 23a is specified by +CS-ADD [1:0]. '+CS-ADD [1: 0] = "10" ' indicates that the rank 1 of the SDRAM module 23a is specified. The CS address conversion unit 223c makes active the chip select signal of the rank of the SDRAM module 23a specified by the chip select data +CS-ADD [1:0] when both of the fault information ALDR ENABLE BIT and ALDR RELEASE BIT are 0. In the normal state in which no fault handling is to be performed, the storage processing device 20 accesses the SDRAM module 23a.

In the conversion table in FIG. 6, '= "00"' expressed as the contents of the fault information CS SEL [1:0] indicates that a fault has occurred in the rank 0 of the SDRAM module 23a. Similarly, the '= "10"' of the fault information CS SEL [1:0] indicates that a fault has occurred in the rank 1 of the SDRAM module 23a. The "redundancy SDRAM module (SLOT1')" indicates the state of access to the redundancy SDRAM module 23b due to the occurrence of a fault, that is, the state in which the value of one of the fault information ALDR ENABLE BIT and ALDR RELEASE BIT is 1. The "SDRAM module (SLOT1)" indicates the state of no occurrence of a fault, that is, the state in which each value of the fault information ALDR ENABLE BIT and ALDR RELEASE BIT is 1.

When the fault information ALDR ENABLE BIT is 0, and the fault information ALDR RELEASE BIT is 1, that is, during the data copy processing before redundancy switching, the CS address conversion unit 223c sets a different SDRAM module 23 to be accessed depending on the instruction active between the instructions +MS-FCH and +MS-STR. In addition, the CS address conversion circuit 223 sets a different chip select signal active depending on the value of the chip select data +CS-ADD [1:0]. As a result, in the example in the table in FIG. 6, for example, the data of the rank 0 of the SDRAM module 23a is written to the rank 0 of the redundancy SDRAM module 23b.

In the data copy processing, the data of the rank for which the fault of the SDRAM module 23a is detected is written to the same rank of the redundancy SDRAM module 23b. After completing the data copy processing, redundancy switching is performed by changing the value of the fault information ALDR RELEASE BIT from 1 to 0, and changing the value of the fault information ALDR ENABLE BIT from 0 to 1. After the redundancy switching, the chip select signal which enables the rank of the redundancy SDRAM module 23b to which the data has been copied to be accessed is generated depending on the chip select data +CS-ADD [1:0].

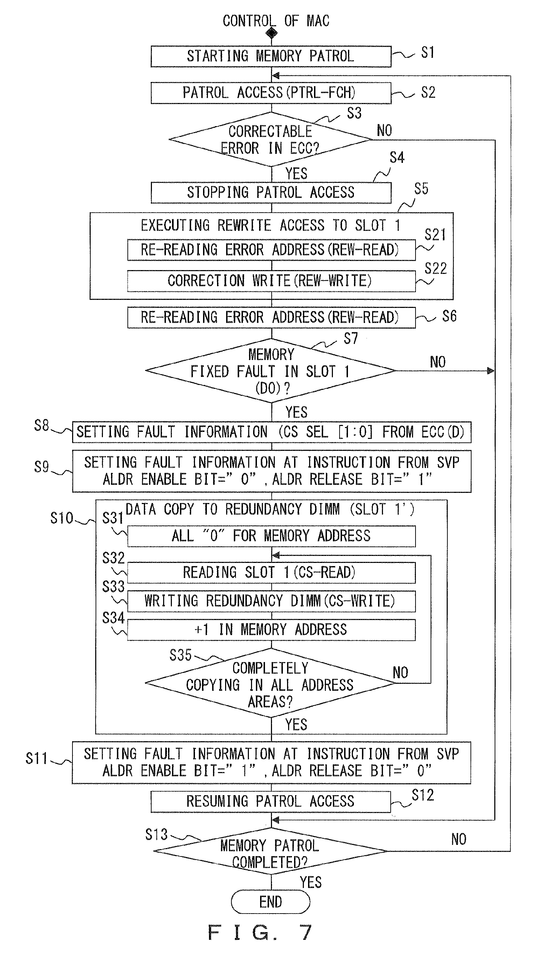

FIG. 7 is a flowchart of an example of the flow of the controlling process performed by the storage processing device for a memory patrol. Next, the operation performed by the storage processing device 20 for a memory patrol is described below in detail with reference to FIG. 7.

The memory patrol is started at the instruction output from the SVP 42 by the operation of the operator of the console 3. First, in step S1, the storage processing device 20 inputs an instruction to start the memory patrol from the SVP 42 through the SCI 43, and starts the memory patrol. The instruction to start the memory patrol is processed by the SVP control unit 206. The input circuit 201 outputs an instruction for read access specified by the SVP control unit 206. In step S2, the storage processing device 20 performs the access (read access) for the memory patrol at the instruction output from the input circuit 201.

The input circuit 201 includes a register (hereafter referred to as an address register) for storing, for example, address data +MAC-ADD [30:0], and uses the value of the address register for generation of an instruction. The memory patrol is performed while, for example, incrementing the value of the address register.

The data read from the SDRAM module 23 by the access for the memory patrol is output to the ECC unit 205 through the data switch circuit 203, and an error check is made in the ECC unit 205. In step S3, for example, the SVP control unit 206 judges whether or not the error detected by the ECC unit 205 is a correctable error. If the error detected by the ECC unit 205 is a correctable error, it is reported to the SVP control unit 206 through the SVP 42. In this case, the judgment in S3 is YES, and control is passed to step S4. On the other hand, if the error detected by the ECC unit 205 is not a correctable error, then the judgment in S3 is NO, and control is passed to step S13.

The judgment of NO in step S3 includes the case in which the ECC unit 205 detects an uncorrectable error. However, in FIG. 7, it is assumed in the judgment of NO in S3 only that no error has been detected. The operation in the case in which an uncorrectable error has been detected is omitted in FIG. 7.

When a correctable error is detected in S3, the SVP control unit 206 stops the patrol access, that is, stops the output of the instruction from the input circuit 201 in step S4. In step S5, the access control circuit 202 performs rewrite access of writing correct data at the address from which the error of the SDRAM module 23a (SLOT1) has been read. The rewrite access is performed by reading again reading the data again from the address at which the data in which the error has been detected (step S21) using the instruction stored in the pipeline unit 222, correcting the read data as necessary, and writing the corrected data at the address (step S22). After performing the rewrite access, control is passed to step S6.

In step S6, the access control circuit 202 reads again the data from the address at which the data is written in S22. In the next step S7, the SVP control unit 206 judges whether or not a fixed fault has occurred in the SDRAM module 23a (slot 1). When the ECC unit 205 detects again a correctable error as a result of the re-read, the SVP control unit 206 judges that a fixed fault has occurred in the SDRAM module 23a from which the data was read, and control is passed to step S8 as a result of the judgment of YES in S7. On the other hand, if the ECC unit 205 has not detected an error in the re-read data, then the SVP control unit 206 judges that no fixed fault has occurred, and control is passed to step S12 as a result of the judgment of NO in S7. In S12, the memory patrol temporarily stopped in S4 is resumed.

If it is judged that a fixed fault has occurred, the ECC unit 205 generates the fault information CS SEL [1:0] depending on the detected error in step S8, sets the generated fault information in the fault information storage unit 225, and outputs the error report about the occurrence of the fixed fault to the external control unit 4. Upon receipt of the output from the error report by the ECC unit 205, the operator who operates the console 3 is notified of the occurrence of the fixed fault by the SVP 42. At the notification from the SVP 42, the operator sets the fault information ALDR ENABLE BIT and ALDR RELEASE BIT for the data copy processing. That is, the value of the fault information ALDR ENABLE BIT is set to 0, and the value of the fault information ALDR RELEASE BIT is set to 1. The set fault information ALDR ENABLE BIT and ALDR RELEASE BIT are input to the SVP control unit 206 through the SCI 43 together with the instruction to store the information.

In step S9, when the fault information ALDR ENABLE BIT and ALDR RELEASE BIT are input, the SVP control unit 206 sets the input fault information in the fault information storage unit 225. After setting the fault information, control is passed to step S10, and the SVP control unit 206 performs the data copy processing of writing the data of the SDRAM module 23a to the SDRAM module 23b.

In the data copy processing, a series of processes are performed as follows.
First, in step S31, the SVP control unit 206 stores an initial value in, for example, the address register of the input circuit 201. The initial value of the address register is, for example, 0 for all bit values. In the next step S32, the input circuit 201 generates a read instruction using the value stored in the address register, and outputs the generated read instruction to the access control circuit 202. The access control circuit 202 reads data from the SDRAM module 23a at the instruction input from the input circuit 201.

In step S33, the input circuit 201 generates an instruction to write the read data at the address stored in the address register using the address stored in the address register, and outputs the instruction to the access control circuit 202. The access control circuit 202 writes the read data to the SDRAM module 23b at the instruction input from the input circuit 201.

The CS address conversion circuit 223 of the access control circuit 202 makes the chip select signal active as illustrated in FIG. 6 using the value of various types fault information supplied from the fault information storage unit 225. When data is read, the chip select signal for selection of the rank of the SDRAM module 23a in which a fixed fault has been detected is made active. When data is written, the chip select signal for selection of the rank of the redundancy SDRAM module 23b of the same rank as the SDRAM module 23a selected when data id read is made active. As a result, the data of the SDRAM module 23a is copied to the redundancy SDRAM module 23b between the same ranks of both SDRAM modules 23.

In step S34, the input circuit 201 increments the value of the address register. In the next step S35, the SVP control unit 206 judges whether or not the data at all addresses has been completely copied. For example, when the value of the address register becomes larger than the maximum address value of the SDRAM module 23, the input circuit 201 notifies the SVP control unit 206 of the information. Upon receipt of the notification from the input circuit 201, the judgment in S35 is YES, and the SVP control unit 206 terminates the data copy processing. On the other hand, when the notification is not received from the input circuit, the judgment in S35 is NO, and control is returned to step S32, thereby data is read and written for the addresses at which no copying process is performed.

The termination of the data copy processing is reported from the SVP control unit 206 to the external control unit 4, and the notification contents from the SVP control unit 206 is displayed on the console 3 by the SVP 42 of the external control unit 4. Thus, the operator of the console 3 changes the value of the fault information ALDR ENABLE BIT to 1, and the value of the fault information ALDR RELEASE BIT to 0. The changed fault information ALDR ENABLE BIT and ALDR RELEASE BIT are input to the SVP control unit 206 through the SCI 43 with the instruction to store the information from the SVP 42. In step S11 to which control is passed after the completion of the data copy processing in step S S10, the SVP control unit 206 sets the input fault information ALDR ENABLE BIT and fault information ALDR RELEASE BIT in the fault information storage unit 225. After setting the fault information, control is passed to step S12, and the SVP control unit 206 instructs the input circuit 201 to resume the access by a memory patrol. In this case, the target of the memory patrol is the rank of the redundancy SDRAM module 23b to which the data has been copied.

In step S13, the SVP control unit 206 judges whether or not the memory patrol has been completed. When, for example, the value of the address register becomes larger than the value (maximum address value) determined by the SDRAM module 23, the input circuit 201 notifies the SVP control unit 206 of the information. When the notification is received from the input circuit 201, the judgment in S13 is YES, and the SVP control unit 206 terminates the memory patrol. On the other hand, when there is no notification from the input circuit 201, the judgment in S13 is NO, and control is returned to step S2. In step S2, access is performed by the memory patrol by reading data from the address different from the previously accessed address.

Thus, as one of the redundancy method of the SDRAM module 23, when a fixed fault which generates a correctable error is detected, the data of the rank in which the fixed fault has been detected may be copied to another SDRAM module. On the other hand, in the embodiment described below, the redundancy described below is provided. The embodiments of the present invention are described below in detail with reference to the attached drawings. In this specification, the components which are assumed basically the same as those described above are assigned the same reference numerals, and the detailed descriptions of the components of the same reference numerals are omitted.

### <First Embodiment>

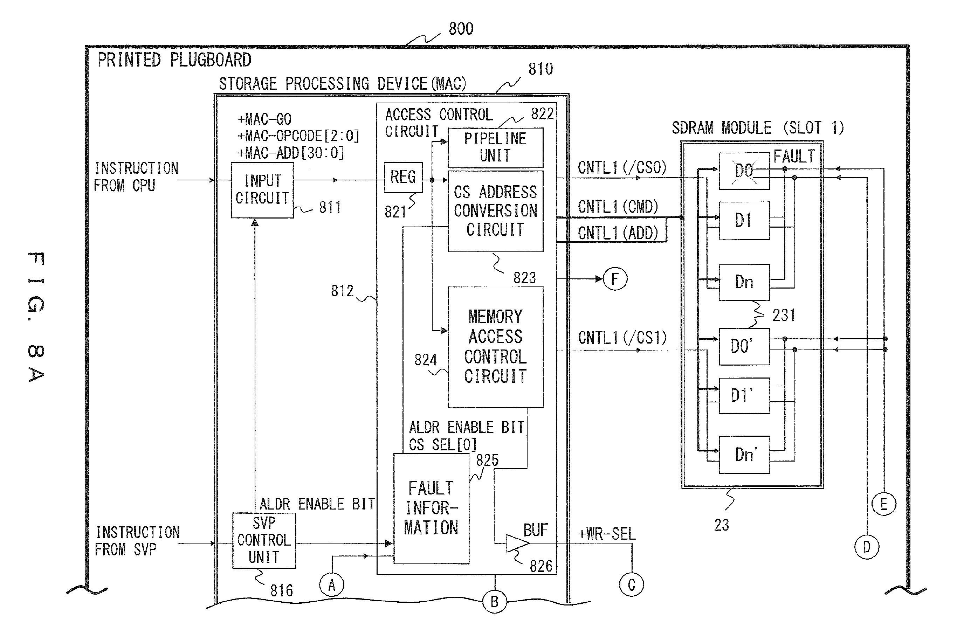

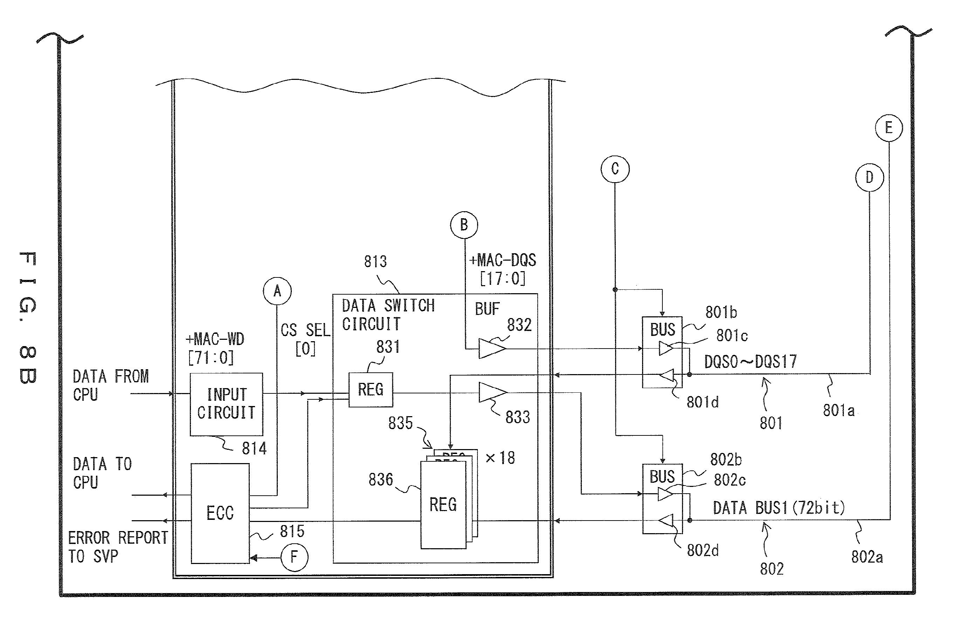

FIGS. 8A and 8B are explanatory views of the configuration of a printed plugboard implemented with the storage processing device (MAC (memory access controller)) according to the first embodiment. A printed plugboard 800 in FIGS. 8A and 8B are loaded into the computer body configuring the computer system 1 illustrated in, for example, FIGS. 1A through 1C. In FIGS. 8A and 8B, the number of slots for loading an SDRAM module is 1. On the printed plugboard 800 in FIGS. 8A and 8B, a storage processing device 810, one SDRAM module 23, two data buses 801 and 802, and the CPU 21 and the SC 22 (system controller) not illustrated in the attached drawings are implemented.

The storage processing device 810 corresponds to the implementation of one SDRAM module SDRAM module 23, and are connected to the SC 22 and the external control unit 4. The external control unit 4 includes the SPC (system power controller) 41, the SVP (service processor) 42, and the SCI (system controller interface) 43. In this example, as the SDRAM module 23 implemented on the printed plugboard may be an SDRAM module with the configuration illustrated in FIG. 2.

The storage processing device 810 includes an input circuit 811, an access control circuit 812, a data switch circuit 813, an input circuit 814, an ECC unit 815, and an SVP control unit 816. They have the following functions.

The input circuit 811 receives an instruction from the CPU 21 through the SC 22, and outputs it to the access control circuit 812. In addition, under the control of the SVP control unit 816, the input circuit 811 generates an instruction and outputs the generated instruction to the access control circuit 812.

The instruction output to the access control circuit 812 includes the activation data + MAC-GO for activation of the storage processing device 20, the operation code + MAC-OPCODE [2:0] indicating the type of instruction, and the address data + MAC-ADD [30:0] indicating the position to be accessed in the SDRAM module 23. Since the printed plugboard 800 is loaded with only one slot for insertion of the SDRAM module 23, only one bit of the chip select data +CS-ADD [1:0] assigned to the bits 30 and 31 of the address data + MAC-ADD is used. In the example in FIG. 8, it is assumed that the available bit of the chip select data is the chip select data +CS-ADD [0].

The configuration of the address data + MAC-ADD [30:0] is illustrated in FIG. 3. The type of the instruction expressed by the value of each bit of the operation code + MAC-OPCODE [2:0] is illustrated in FIG. 4. The detailed descriptions of the address data + MAC-ADD [30:0] and the operation code + MAC-OPCODE [printed plugboard 2:0] are omitted here.

The access control circuit 812 accesses the SDRAM module 23 according to the instruction input from the input circuit 811. Depending on the type of instruction to be processed, the access control circuit 812 changes the value of the selection information +WR-SEL to be supplied to the two bidirectional bus 801 and data bus 802. The data transfer through the bus 801 and the data bus 802 is controlled by the value of the selection information. As a result, the data transfer from the SDRAM module 23 may be performed during read access, and the data transfer to the SDRAM module 23 may be performed during write access.

For example, the selection information +WR-SEL is 1-bit information for selection of an active direction by the bus 801 and the data bus 802. For example, if the value of the selection information +WR-SEL is 0, the data output from the data switch circuit 813 to the SDRAM module 23 becomes active. If the value of the selection information +WR-SEL is 1, the data output from the SDRAM module 23 to the data switch circuit 813 becomes active. Therefore, the value of the selection information +WR-SEL is set to 1 during read access, and the value of the selection information +WR-SEL is set to 0 during write access.

The bus 801 includes a signal line group 801a and a bus buffer 801b connected to the SDRAM module 23. The bus buffer 801b includes a buffer 801c for storing the data output from the 813, and a buffer 801d for storing the data output to the data switch circuit 813. The buffer 801c stores the data output from the data switch circuit 813 if the value of the selection information +WR-SEL is 0. The buffer 801d stores the data from the SDRAM module 23 if the value of the selection information +WR-SEL is 1. As a result, when the value of the selection information +WR-SEL is 1, only the data output from the data switch circuit 813 to the SDRAM module 23 is active, and when the value of the selection information +WR-SEL is 0, only the data output from the SDRAM module 23 to the data switch circuit 813 is active. The bus 801 is active only in one direction by the operation of the bus buffer 801b depending on the value of the selection information +WR-SEL.

Similarly, the data bus 802 includes a signal line group 802a and a data bus 802 connected to each rank of the SDRAM module 23. The bus buffer 802b also includes a buffer 802c for storing the data output from the 813, and a buffer 802d for storing data read from the SDRAM module 23. The buffer 802c stores the data output from the 813 if the value of the selection information +WR-SEL is 0. The buffer 802d stores the read data output from the SDRAM module 23 if the value of the selection information +WR-SEL is 1. As a result, when the value of the selection information +WR-SEL is 1, only the data output from the data switch circuit 813 to the SDRAM module 23 is active, and when the value of the selection information +WR-SEL is 0, only the data output from the SDRAM module 23 to the data switch circuit 813 is active. The data bus 802 is active only in one direction by the operation of the bus buffer 802b depending on the value of the selection information +WR-SEL.

The access control circuit 812 includes a register 821, a pipeline unit 822, a CS address conversion circuit 823, a memory access control circuit 824, a fault information storage unit 825, and a buffer 826.

The register 821 stores the instruction output from the input circuit 811. The pipeline unit 822 holds a specified number of instructions last stored in the register 821. The CS address conversion circuit 823 generates a chip select signal to be supplied to the SDRAM module 23. The memory access control circuit 824 generates an address signal which specifies the address of the SDRAM module 23. The fault information storage unit 825 stores various types of fault information. The buffer 826 stores the selection information +WR-SEL. The selection information +WR-SEL is generated by the memory access control circuit 824. The bus 801 and the data bus 802 changes an active direction according to the selection information +WR-SEL stored in the buffer 826.

The data switch circuit 813 manages the output of data read from the SDRAM module 23, and the output of the data from the CPU 21 to the SDRAM module 23.

The data from the CPU 21 is input to the storage processing device 810 through the SC 22. The input circuit 814 inputs the data from the CPU 21 output from the SC 22, and supplies the data to the data switch circuit 813. "+MAC-WD [71:0]" expressed in FIG. 8B indicates the 72-bit write data input to the input circuit 814.

The data switch circuit 813 includes a register 831, a buffer 832, a buffer 833, and a register group 835. The register group 835 includes at least the number of registers 835 equal to the number of memory elements 231 configuring 1 rank of the SDRAM module 23. In FIG. 8B, the register group 835 has a total of 18 registers. Each register corresponds to any of 18 memory elements of the SDRAM module 23.

The data strobe signals DQS0 through DQS17 are supplied to the memory element 231 configuring each rank of the SDRAM module 23. "+MAC-DQS [17:0]" expressed in FIG. 8B indicates the data (hereafter referred to as "data strobe information") corresponding to the data strobe signals DQS0 through DQS17 to be output by the memory access control circuit 824 to each memory element 231 during write access. The data output from the buffer 832 which stores the data strobe information is supplied as a data strobe signal to each memory element 231 through the buffer 801c of the bus buffer 801b and the signal line group 801a. The "DQS0 through DQS17" expressed in FIG. 8B indicates a data strobe signal passed in the signal line group 801a during read access or during write access. During read access, a data strobe signal to each memory element 231 which is supplied to the SDRAM module 23 passes in the signal line group 801a.

Since a data strobe signal is to be supplied to each memory element 231, the signal line group 801a may concurrently transfer 18 data strobe signals. Each of the buffers 801c and 801d of the bus buffer 801b has a storage capacity of 18 bits or more.

During write access, the data stored in the register 831 and the data strobe signal output from the buffer 832 are supplied to the SDRAM module 23 respectively through the data bus 802 and the bus 801. Each memory element 231 of each rank of the SDRAM module 23 may store 4-bit data corresponding to each memory element in the data supplied through the data bus 802.

During write access, the chip select signal supplied to each rank in the SDRAM module 23 excluding the chip select signal in the rank in which a fixed fault has been detected is made active. Unless there is any rank in which a fault has been detected, the chip select signal supplied to each rank is made active. When there is a rank in which a fault has been detected, only the chip select signal supplied to the rank in which no fault has been detected is made active.

During read access, only the chip select signal supplied to one rank of the SDRAM module 23 is made active. The data read from one rank of the SDRAM module 23 to which an active chip select signal has been supplied, and the data strobe signal supplied to the SDRAM module 23 are input to the register group 835 respectively through the data bus 802 and the bus 801. The corresponding data strobe signal and data are supplied to each register 836 configuring the register group 835. Each register 836 stores the corresponding supplied 4-bit data when the supplied data strobe signal becomes active. The data stored in each register 836 is supplied to the ECC unit 815. The data supplied to the ECC unit 815 is 72-bit data in which 8 bits refer to ECC data.

The ECC unit 815 makes an error check of the 64-bit data excluding the ECC data using the ECC data included in the data supplied from the data switch circuit 813. If no error is detected from the data in the error check, the ECC unit 815 outputs the input data as is to the SC 22. On the other hand, when an uncorrectable error is detected in the check, the ECC unit 815 outputs to the external control unit 4 an error report as a message indicating that the uncorrectable error has occurred. If a correctable error is detected from the data by the error check, the ECC unit 815 outputs to the external control unit 4 an error report as a message indicating that the correctable error has occurred, corrects the error, and outputs the corrected data to the SC 22.

When an error is detected from the read data, the ECC unit 815 also generates and outputs a fault information CS SEL [0] in addition to the error report.

The error report output to the external control unit 4 is processed by the SVP 42, and the contents of the error report is transmitted to the operator through the console 3. Upon confirmation of the error report, the operator operates the console 3, and sets the fault information ALDR ENABLE BIT, that is, changes the value of the fault information ALDR ENABLE BIT from 0 to 1. When the value of the fault information ALDR ENABLE BIT is changed, it is output from the SVP 42, and input to the fault information storage unit 825 through the SCI 43 and the SVP control unit 816.

The fault information storage unit 825 stores the fault information CS SEL [0] output from the ECC unit 815 and the fault information ALDR ENABLE BIT output from the external control unit 4. These pieces of fault information are input to the CS address conversion circuit 823, and reflected in generating a chip select signal by the CS address conversion circuit 823.

The SVP control unit 816 corresponds to the JTAG, and processes an instruction output from the SVP 42. If the instruction from the SVP 42 is to perform a memory patrol for confirmation of the state of the SDRAM module 23, the memory patrol is performed. The SVP control unit 816 controls the input circuit 811 to realize the memory patrol.

The input circuit 811 includes an address register for storing, for example, address data + MAC-ADD [30:0], and uses the value of the address register in generating an instruction for the memory patrol. The value of the address register is incremented at any time under the control of the SVP control unit 816. By incrementing the value of the address register, the memory patrol is performed by sequentially changing the address of the SDRAM module 23 to be accessed.

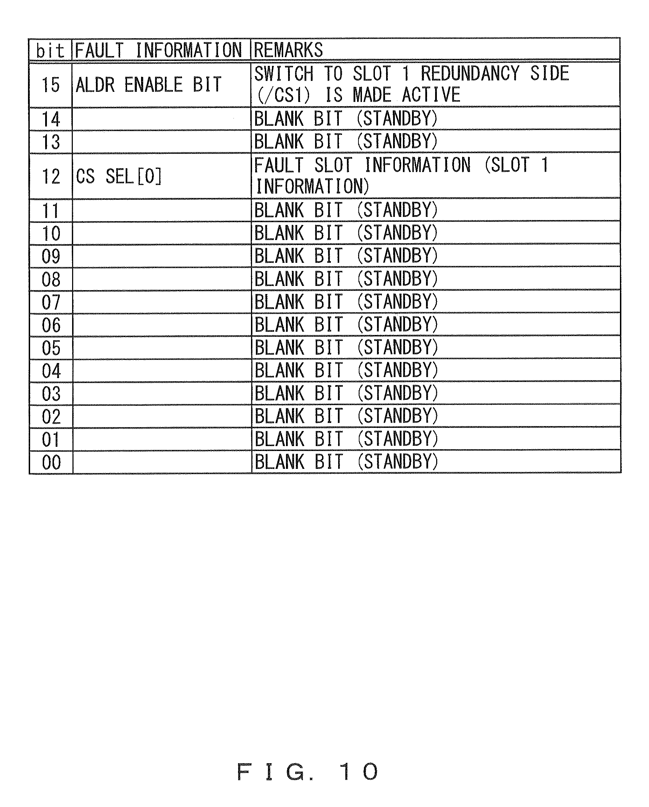

FIG. 10 is an explanatory view of the contents of various types of fault information according to the first embodiment. The fault information storage unit 825 stores as fault information the fault information CS SEL [0] and the fault information ALDR ENABLE BIT. As illustrated in FIG. 10, the fault information CS SEL [0] indicates the slot into which the SDRAM module 23 in which a fault has practically been detected is inserted. According to the present embodiment, there is only one slot into which the SDRAM module 23 is inserted. Therefore, when the value of CS SEL [0] is 0, it indicates that no fault is detected in the SDRAM module 23, and the value of 1 of CS SEL [0] indicates that a fault has been detected in the SDRAM module 23. The fault information ALDR ENABLE BIT indicates whether or not the switch to a redundancy side is active. When the value of the fault information ALDR ENABLE BIT is 0, it indicates that the switch to the redundancy side is inactive. When the value is 1, it indicates that the switch to the redundancy side is active.

In the first embodiment, the computer body, that is, the printed plugboard 800 assumes that only one SDRAM module 23 having two ranks are loaded. Based on the assumption, according to the first embodiment, one rank in the two ranks of one SDRAM module 23 is used as a redundancy side. The remaining rank is used as a normal side which is normally accessed. In the first embodiment, since the SDRAM module 23 and its rank in which a fault occurs are not to be specified, the fault information CS SEL [1] illustrated in FIG. 5 is not used. The fault information CS SEL [0] is used as the information indicating whether or not a fault has occurred in the rank on the normal side in one SDRAM module 23.

The SDRAM module 23 selects the rank to be accessed using a chip select signal as described above. During write access, the chip select signals of two ranks are made active, and the same data is simultaneously stored in the ranks.

In the first embodiment, since the same data is stored in each rank, it is not necessary to copy data on the normal side to the rank on the redundancy side. In addition, although an uncorrectable error occurs, the same data is also stored in the rank on the redundancy side. Therefore, necessary data is not always lost. Therefore, in the first embodiment, the reliability of the system is largely improved, and the error handling may be quickly performed. The time required to store the same data in each rank may be equal to the time required to store the data in one rank. Thus, according to the present embodiment, the reduction in access speed in the redundancy process may be avoided. Also according to the present embodiment, it is not necessary to copy data. Therefore, the fault information ALDR RELEASE BIT illustrated in FIG. 5 is not used.

The SDRAM module 23 according to the present embodiment has no specific function. Since the redundancy is read using the SDRAM module 23 above, the increase of the cost of the entire system may be suppressed according to the present embodiment as compared with the case in which the redundancy is realized using a specific memory module. Furthermore, a complicated control as a result of adopting a specific memory module may also be avoided.

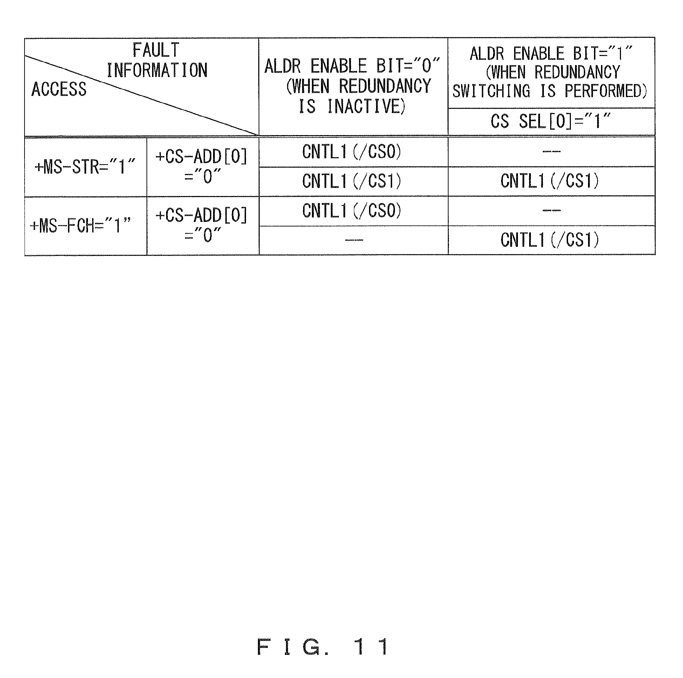

FIG. 11 is an explanatory view of an operation of the CS address conversion circuit according to the first embodiment. In the operation of the CS address conversion circuit, the chip select signal which is made active by the CS address conversion circuit 823 from the contents of the various types of input information is expressed in a table (conversion table) as with FIG. 6. Since the target indicated by "+MS-STR", "+MS-FCH", '"CNTL1 (/CS)", "CNTL1 (/CS1)", "+CS-ADD [0] ", etc. is the same as in FIG. 6, the explanation is omitted here.

As illustrated in FIG. 11, when the value of the fault information ALDR ENABLE BIT is 0, that is, when redundancy is inactive, the chip select signals for write access are made active in each rank (+MS-STR = "1", +CS-ADD [0] = "0") . On the other hand, the chip select signal for read access is made active only in the rank on the normal side (CNTL1 (/CSO)) (+MS-FCH = "1", +CS-ADD [0] = "0"). Thus, the write access is simultaneously executed on each rank, and the read access is performed only on one rank on the normal side.

When redundancy is active with the value of 1 for the fault information ALDR ENABLE BIT, the chip select signal for write access and the chip select signal for read access are active only in the rank of the redundancy side (CNTL1 (/CS1)). When redundancy is active, the value of the fault information CS SEL [0] is 1. When redundancy is active, the rank in which a fault has occurred (a fault has occurred on the normal side) is not accessed. Hereafter, active redundancy is also referred to as redundancy switching as described with reference to FIG. 11.

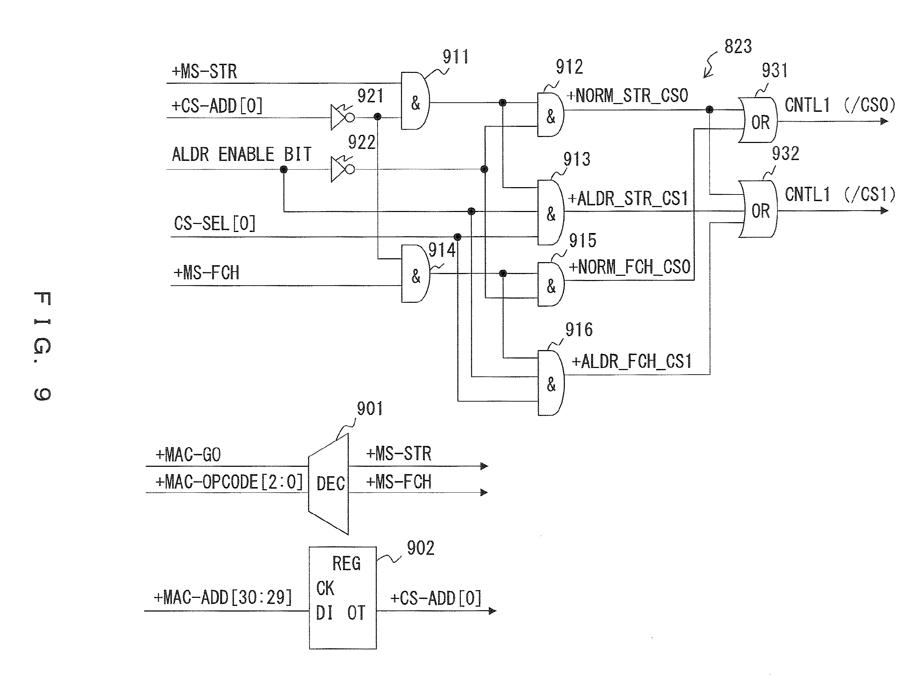

FIG. 9 is an explanatory view of the configuration of the CS address conversion circuit according to the first embodiment. Next, with reference to FIG. 9, the configuration of the CS address conversion circuit 823 which generates a chip select signal as expressed in the conversion table in FIG. 11 is concretely described below.

The CS address conversion circuit 823 illustrated in FIG. 9 includes a decoder 901, a decoder 901, six AND gates 911 through 916, two NOT gates 921 and 922, and two OR gates 931 and 932.

The decoder 901 inputs the activation data + MAC-GO and the operation code + MAC-OPCODE. When the activation data + MAC-GO is active, the decoder 901 decodes the operation code + MAC-OPCODE, and makes one of the instructions +MS-STR and +MS-FCH active, that is, for example, set the value to 1. The register 902 stores the address data + MAC-ADD [30:29]. The address data + MAC-ADD [29] in the address data + MAC-ADD [30:29] is output from the register 902 as the chip select data +CS-ADD [0]. In the example in FIG. 9, only the chip select data +CS-ADD [0] is used in the generation of the chip select signal.

Described first below is the configuration and the operation relating to the generation of a chip select signal during write access, that is, when the instruction +MS-STR is active.

The chip select data +CS-ADD [0] output from the register 902 is input to the NOT gate 921, and the negation of the chip select data +CS-ADD [0] is output from the NOT gate 921. The AND gate 911 inputs the negation of the chip select data +CS-ADD [0] output from the NOT gate 921 and the instruction + MS-STR, and outputs the logical product of them to the AND gate 912.

In addition to the logical product output from the AND gate 911, the AND gate 912 also input the inversion signal of the fault information ALDR ENABLE BIT output by the NOT gate 922, and outputs the logical product (expressed by + NORM_STR_CSO in FIG. 9) of them. The logical product + NORM_STR_CSO is output to two OR gates 931 and 932. The logical sum of these OR gates 931 and 932 is supplied as chip select signals CNTL1 (/CSO) and CNTL1 (/CS1).

When the instruction + MS-STR is active, the value of the logical product + NORM_STR_CSO is 1. To set the value of the logical product + NORM_STR_CSO to 1 when the instruction + MS-STR is active, it is necessary that the values of the chip select data +CS-ADD [0] and the fault information ALDR ENABLE BIT are 0. Therefore, when no fault occurs, that is, when redundancy is inactive, the value of the logical product + NORM_STR_CS0 is 1.

The fault information ALDR ENABLE BIT is input to the AND gate 913. In addition, the AND gate 913 inputs the logical product output by the AND gate 911 and the fault information CS SEL [0], and outputs the logical product (+ ALDR_STR_CS1 in FIG. 9) of them. When the instruction + MS-STR is active, the value of the logical product + ALDR_STR_CS1 is 1. To set the value of the logical product + ALDR_STR_CS1 to 1 when the instruction + MS-STR is active, it is necessary that the value of the chip select data +CS-ADD [0] is 0, and the values of the fault information ALDR ENABLE BIT and the fault information CS SEL [0] are 1. Therefore, in the situation when a fault occurs, that is, when redundancy is switched, the value of the logical product + ALDR_STR_CS1 is 1.

The logical product + NORM_STR_CSO is output to the two OR gates 931 and 932. The logical product + ALDR_STR_CS1 is output only to the OR gate 932. The logical sum output by the OR gates 931 and 932 is supplied to the ranks 0 and 1 as the chip select signals CNTL1 (/CSO) and CNTL1 (/CS1) respectively. As described above, when the instruction + MS-STR is active, the chip select signals CNTL1 (/CSO) and CNTL1 (/CS1) are both active if the redundancy is inactive, and only the chip select signal CNTL1 (/CS1) is active if the redundancy is switched.

Thus, when the instruction + MS-STR is active, the chip select signal is active as expressed in the conversion table in FIG. 11.

Described next is the configuration relating to the generation of a chip select signal during read access, that is, when the instruction + MS-FCH is active.

The instruction + MS-FCH is input to the AND gate 914. The AND gate 914 outputs the logical product of the instruction + MS-FCH and the negation of the chip select data +CS-ADD [0] input from the NOT gate 921. The logical product output from the AND gate 914 is input to the AND gates 915 and 916.

The AND gate 915 outputs the logical product + NORM_FCH_CS0 of the logical product input from the AND gate 914 and the negation of the fault information ALDR ENABLE BIT input from the NOT gate 922. The value of the logical product + NORM_FCH_CS0 is 1 only when the instruction + MS-FCH is active. When the value of the logical product + NORM_FCH_CS0 is 1, the values of the chip select data +CS-ADD [0] and the fault information ALDR ENABLE BIT are 0 when the instruction + MS-FCH is active. Therefore, the value of the logical product + NORM_FCH_CS0 is 1 when no fault occurs. Since the logical product + NORM_FCH_CS0 is input to the OR gate 931, the chip select signal CNTL1 (/CSO) is active when no fault occurs (when redundancy is inactive).

The logical product output by the AND gate 914, the fault information ALDR ENABLE BIT, and the fault information CS SEL [0] are input to the AND gate 916. Therefore, the value of the logical product (expressed as "+ ALDR_FCH_CS1" in FIG. 9) output from the AND gate 916 is 1 when the instruction + MS-FCH is active, and when redundancy is switched with the fault information ALDR ENABLE BIT set as 1. The logical product + ALDR_FCH_CS1 is output to the OR gate 932. As a result, the chip select signal CNTL1 (/CS1) of the rank 1 is active when redundancy is switched, and is inactive when redundancy is inactive.

Thus, even when the instruction + MS-FCH is active, the chip select signal is set as active as indicated on the conversion table in FIG. 11. The CS address conversion circuit 823 changes the active chip select signal as illustrated in FIG. 11 depending on the type of access and depending on whether or not the redundancy is active.

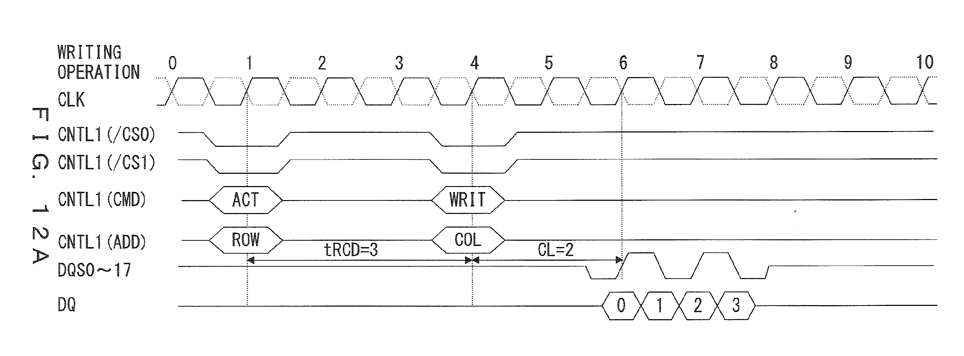

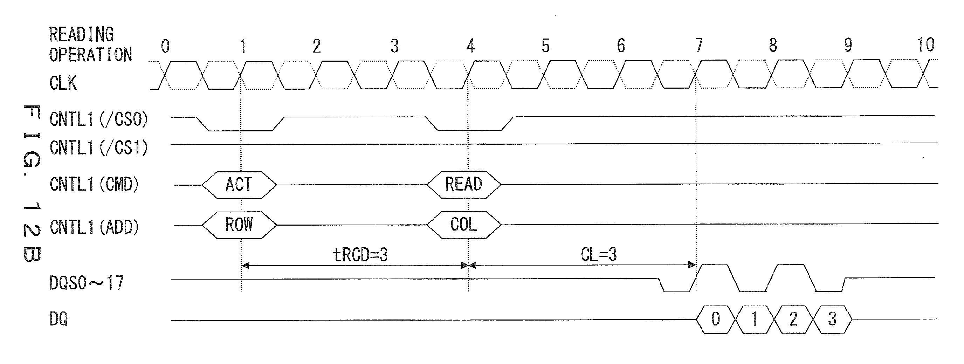

FIGS. 12A and 12B are timing charts of the operation of the SDRAM module when redundancy is inactive. FIG. 12A is a timing chart during write access. FIG. 12B is a timing chart during read access.

In FIGS. 12A and 12B, CLK indicates a clock for operating the SDRAM module 23 (for example, a system clock). Similarly, the CNTL1 (/CSO) indicates a chip select signal supplied to the rank 0. The CNTL1 (/CS1) indicates a chip select signal supplied to the rank 1. The CNTL1 (CMD) is an instruction supplied to the SDRAM module 23. The CNTL1 (ADD) is an address signal supplied to the SDRAM module 23. The DQS0 through 17 are data strobe signals supplied to the memory elements 231, DQ indicates a data signal supplied to each memory element 231 or output from each memory element 231.

The waveform of a clock is expressed by a solid line and a dotted line 180° different from each other in phase. The phases are different because the SDRAM module 23 operates in synchronization with both of the rising and falling phases. The timing of the operation of the SDRAM module 23 is expressed by the crossing point of the waveforms of the clock in solid line and dotted line. The numerals of 0 through 9 above the waveforms of the clock indicate the number of clocks starting with the position of 0.

As instructions, FIGS. 12A and 12B illustrate ACT, WRIT, and READ. ACT is an instruction to place the SDRAM module 23 in the active state. The row address signal (expressed as "ROW" in FIGS. 12A and 12B) and the bank address signal (not illustrated in the attached drawings) are output simultaneously with the ACT instruction, and fetched by the SDRAM module 23.

WRIT is an instruction to specify a data write. When the SDRAM module 23 is allowed to perform write access, the column address signal (expressed as "COL" in FIGS. 12A and 12B) is output simultaneously with the WRIT instruction.

READ is an instruction to specify a data read. When the SDRAM module 23 is allowed to perform read access, the column address signal COL is output simultaneously with the READ instruction.

"tRCD" (active to read or write command delay) indicates the time taken from the input of one instruction to the time point at which the next instruction may be input. For example, "tRCD = 3" indicates that the time taken to reach the point at which the next instruction may be input is 3 clocks.

The column address signal is referred to as a CAS (column address strobe) signal. The CL (CAS latency) indicates the delay time required to reach the time point at which a read or a write of data is practically performed after the input of the column address (CAS) signal to the SDRAM module 23. For example, "CL = 3" indicates that the delay time is 3 clocks.

During write access, as illustrated in FIG. 12A, the chip select signals CNTL1 (/CSO) and CNTL1 (/CS1) are simultaneously made valid. It is realized in the CS address conversion circuit 823 illustrated in FIG. 9 by inputting to the OR gates 931 and 932 the logical product + NORM_STR_CSO of 1 which is output by the AND gate 912. Each instruction, each address signal, each data strobe signal, and each data signal are supplied to each memory element 231. Therefore, data is written to each rank.

Unlike the data write, a data read is not to be performed in each rank. Therefore, during write access, as illustrated in FIG. 12B, only the chip select signal CNTL1 (/CSO) of the rank 0 is active. It is realized in the CS address conversion circuit 823 by inputting only to the OR gate 931 the logical product +NORM_FCH_CS0 of 1 which is output by the AND gate 915. Thus, the data is read only from the rank 0.

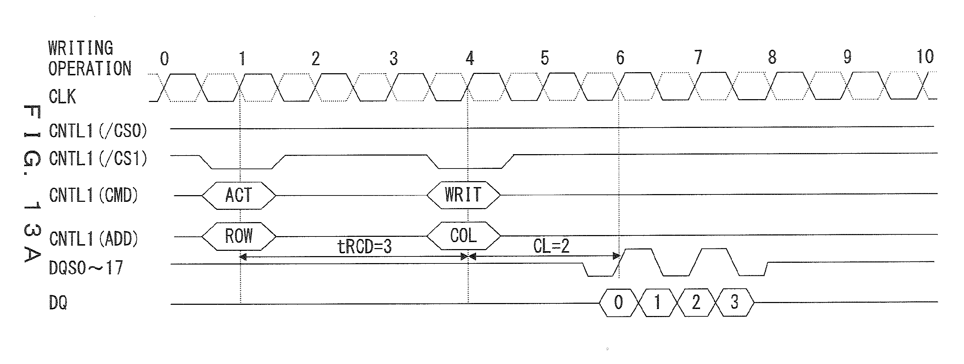

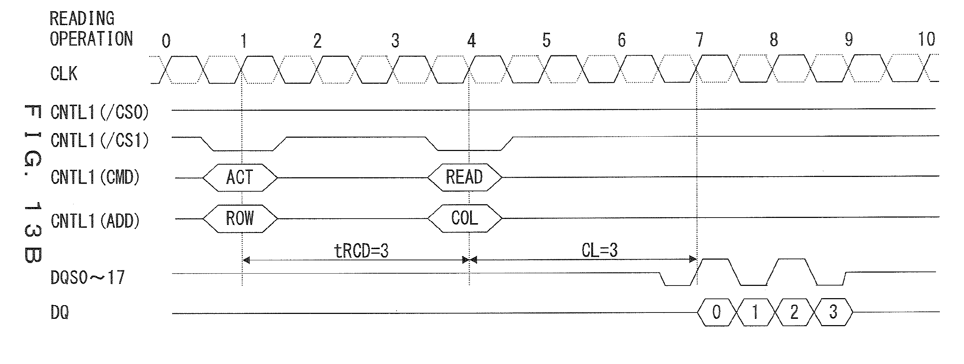

FIGS. 13A and 13B are timing charts of the operations of the SDRAM module when redundancy is active. FIG. 13A is a timing chart during write access, and FIG. 13B is a timing chart during read access. Since the meanings of a plurality of symbol strings expressed in FIGS. 13A and 13B are the same as those illustrated in FIGS. 12A and 12B, the descriptions of each symbol string are omitted here.

When redundancy is active, a fixed fault occurs in the rank 0, and it is switched to the rank 1. Therefore, during write access, as illustrated in FIG. 13A, only the chip select signal CNTL1 (/CS1) of the rank 1 is active. Similarly, also during read access, as illustrated in FIG. 13B, only the chip select signal CNTL1 (/CS1) of the rank 1 is made active. Thus, both during write access and during read access, the access to the rank 0 where a fixed fault has occurred may be avoided.

In the CS address conversion circuit 823 illustrated in FIG. 9, if write access is performed when redundancy is active, the value of the logical product + NORM_STR_CS1 output by the AND gate 913 is 1, and the logical product + NORM_STR_CS1 of 1 is input only to the OR gate 932. Therefore, only the chip select signal CNTL1 (/CS1) of the rank 1 is active. Similarly, when read access is performed when redundancy is active, the value of the logical product + NORM_FCH_CS1 output from the AND gate 916 is 1, and the logical product + NORM_FCH_CS1 of 1 is input only to the OR gate 932. Therefore, only the chip select signal CNTL1 (/CS1) of the rank 1 is active.

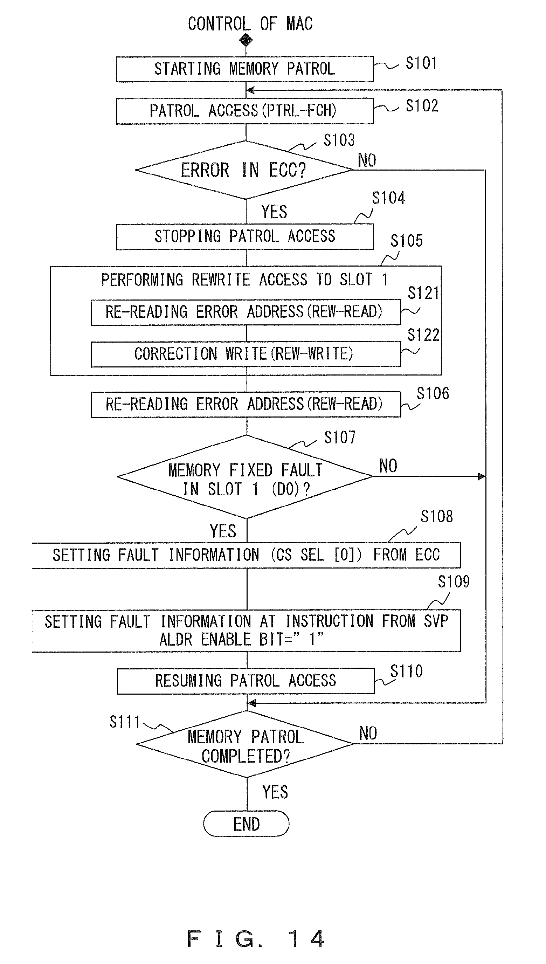

FIG. 14 is a flowchart of an example of the flow of the controlling process performed by the storage processing device according to the first embodiment for a memory patrol. The operation performed by the storage processing device 810 for a memory patrol is described below in detail with reference to FIG. 14. The memory patrol is started by the instruction output by the SVP 42 by the operation of the operator of the console 3.

First, in step S101, the storage processing device 810 inputs from the SVP 42 through the SC 143 an instruction to start the memory patrol, thereby starting the memory patrol. The instruction to start the memory patrol is handled by the SVP control unit 816. The input circuit 811 outputs an instruction for read access specified by the SVP control unit 816. In step S102, the storage processing device 810 performs the access (read access) for a memory patrol at the instruction output by the input circuit 811.

The input circuit 811 has the function of incrementing the value of the register (hereafter referred to as an "address register") for storing the address data + MAC-ADD [30:0] and the value of the address register. The input circuit 811 generates an instruction using the value of the address register The access by a memory patrol is realized by inputting the instruction generated using the value of the address register to the access control circuit 812.

The data read from the memory element 231 of the rank 0 of the SDRAM module 23 by the access in the memory patrol is output to the corresponding register 836 in the register group 835 of the data switch circuit 813 through the bidirectional data bus 802. The data strobe signal supplied by the access control circuit 812 to each memory element 231 is output to the corresponding register 836 in the register group 835 of the data switch circuit 813 through the bidirectional bus 801. By inputting the data strobe signal, the data of the corresponding buffer 232 is stored in each register 836. The data of each register 836 is output to the ECC unit 815, and an error check is performed. In step S103, the SVP control unit 816 judges whether or not the ECC unit 815 has detected an error. When the ECC unit 815 detects an error, it is reported to the SVP control unit 816 through, for example, the SVP 42. In this case, the judgment in S103 is YES, and control is passed to step S104. On the other hand, unless the ECC unit 815 detects an error, the judgment in S103 is NO, and control is passed to step S110.

In step S110, the SVP control unit 816 instructs the input circuit 811 to output an instruction to read data next. In the next step S111, the SVP control unit 816 judges whether or not the memory patrol has been completed. For example, if the value of the address register exceeds the value determined by the SDRAM module 23, for example, the maximum address value of the SDRAM module, then it is reported to the SVP control unit 816. When the report is received from the input circuit 811, the judgment in S111 is YES, and the SVP control unit 816 terminates the memory patrol then. On the other hand, unless the report is received from the input circuit, the judgment in S111 is NO, and control is returned to step S102. In step S102, the access is performed by the memory patrol for reading data from another address.

When an error is detected in step S103, the SVP control unit 816 stops the access by the memory patrol, that is, stops the output of an instruction from the input circuit 811 in step S104. In the next step S105, in the SDRAM module 23 inserted into the slot 1, the access control circuit 812 performs write access of writing correct data at the address in the rank 0 at which the data in which an error has been detected. In the rewrite access, data is read again from the address at which the data including the detected error has been read using the instruction stored in the pipeline unit 822 (step S121), and the read data is written at address (step S122) . When an error occurs in the re-read data, the ECC unit 815 corrects error, and writes the error-corrected data. After performing the rewrite access, control is passed to step S106.

In step S106, the access control circuit 812 reads data again from the address corresponding to the data in which the error has detected. In the next step S107, the SVP control unit 816 judges whether or not a fixed fault has occurred in the rank 0 of the SDRAM module 23. If the ECC unit 815 detects an error again as a result of the data read in S106, it is assumed that a fixed fault has occurred in the rank 0 of the SDRAM module, and the judgment in S107 is YES, thereby passing control to step S108. On the other hand, unless the ECC unit 815 detects an error as a result of the data read, it is assumed that a fixed fault has not occurred and the judgment in S107 is NO, thereby passing control to step S110.

If it is judged that a fixed fault has occurred, the ECC unit 815 generates the fault information CS SEL [0] in step S108, the generated fault information is set in the fault information storage unit 825, and the error report indicating the occurrence of the fixed fault is output to the external control unit 4. Upon receipt of output of the error report from the ECC unit 815, it is reported that the fixed fault has occurred to the operator who operates the console 3. Upon receipt of the report, the operator sets the fault information ALDR ENABLE BIT for redundancy switching. That is, the operator sets the value of the fault information ALDR ENABLE BIT to 1. The set fault information ALDR ENABLE BIT is input from the SVP 42 to the SVP control unit 816 through the SCI 43 with the instruction to store the data. In step S109, the SVP control unit 206 sets the input fault information ALDR ENABLE BIT in the fault information storage unit 825. After setting the fault information ALDR ENABLE BIT, control is passed to step S110.

In step S110, the SVP control unit 816 instructs the input circuit 811 to generate an instruction for a memory patrol to resume the memory patrol. In the next step S111, the SVP control unit 816 judges whether or not the memory patrol has been completed. If, for example, the value of the address register exceeds a value determined by the SDRAM module 23, for example, the maximum address value of the SDRAM module, the input circuit 811 notifies the SVP control unit 816 or the information. When the notification from the input circuit 811 is received, the judgment in S111 is YES, and the SVP control unit 816 terminates the memory patrol. On the other hand, no notification is received from the input circuit, the judgment in S111 is NO, and control is returned to step S102. In step S102, access is performed by the memory patrol for reading data from another address.

Thus, when an error is detected in the data read from the SDRAM module, it is confirmed whether or not the error is detected again. This holds true also when an uncorrectable error is detected. Therefore, the judgment of YES in step S103 includes the case in which an uncorrectable error is detected. However, when an uncorrectable error is detected, control may be passed from step S103 to step S108 so that access to the rank 0 is to be avoided. That is, the operator may be allowed to select a method for handling an error.

In the first embodiment, the restriction of the ranks for redundancy switching, that is, active access when a fault occurs is realized by setting the fault information ALDR ENABLE BIT and CS SEL [0]. It is to avoid the necessity to change the contents of the instruction input to the access control circuit 812. That is, it is to suppress the complicated control for access to the SDRAM module 23. However, redundancy switching may be realized by adopting another method. For example, it may be realized by changing the contents of the instruction input to the access control circuit 812.

Furthermore, although redundancy switching is performed when a memory patrol is made in the first embodiment, redundancy switching may be performed other than during the execution of the memory patrol. For example, by allowing the SVP control unit 816 to monitoring the fault information CS SEL [0] etc. output by the ECC unit 815 other than during the execution of the memory patrol, the SVP control unit 816 may automatically switch the situation. To monitor the fault information, it is preferable that the ECC unit 815 constantly outputs the fault information CS SEL [0] by detecting an error. Although the ECC unit 815 constantly outputs the fault information CS SEL [0] by detecting an error, an inappropriate operation by the CS address conversion circuit 823 may be avoided by controlling the storage of the fault information CS SEL [0] in the fault information storage unit 825.

### <Second Embodiment>

The first embodiment above assumes the case in which only one SDRAM module 23 is used. On the other hand, the second embodiment realizes the redundancy by assuming the case in which a plurality of SDRAM modules 23 are used.

As with the first embodiment, a component which may be assumed to be the same as the component described above is assigned the same reference numeral in the second embodiment. The second embodiment is described by specifying only the point different from the first embodiment.

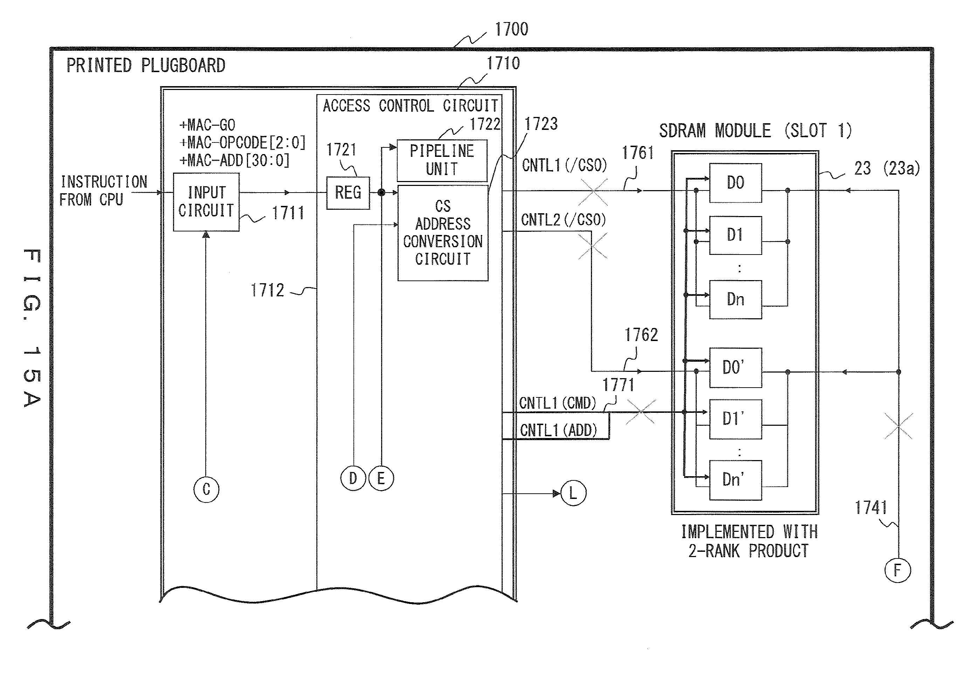

FIGS. 15A through 15C are explanatory views of the configuration of a printed plugboard implemented with the storage processing device according to the second embodiment. A printed plugboard 1700 illustrated in FIGS. 15A through 15C is loaded into the computer body configuring the computer system 1 illustrated in FIGS. 1A through 1C as with the first embodiment. In the present embodiment, there are two slots loaded with the SDRAM module 23. On the printed plugboard 1700 according to the present embodiment, in addition to a storage processing device 1710, two SDRAM modules 23 (23a and 23b), and two bidirectional data buses 1740 and 1750 illustrated in the figures, a plurality of CPUs 21 and the SC 22 not illustrated in the figures are implemented.

The storage processing device 1710 corresponds to the implementation of the two SDRAM modules 23, and is connected to the SC 22 and the external control unit 4. Also with the configuration, the configuration illustrated in FIG. 2, that is, two ranks are included for the SDRAM module 23 to be implemented.

In the second embodiment, the redundancy of the SDRAM module is realized by setting one of the two SDRAM modules 23 as the normal side and the other as the redundancy side. Each SDRAM module 23 is processed in a rank unit. One rank of the SDRAM module 23a is used in combination with one rank of the SDRAM module 23b. In this example, a combination of the rank 0 of the SDRAM module 23a and the rank 0 of the SDRAM module 23b is assumed as a combination of ranks (access target unit). Another combination of ranks is a combination of the rank 1 of the SDRAM module 23a and the rank 1 of the SDRAM module 23b. The access to the two SDRAM modules 23 is performed by selecting one of the two combinations. The explanation below is made by considering the configuration and the operation which enables the access to each SDRAM module 23 according to the selected combination.

To enable the access according to the two combinations above, the memory element of each rank of the SDRAM module 23a is connected to the same data bus 1740, and the memory element of each rank of the SDRAM module 23b is also connected to the same data bus 1750.

The data bus 1740 includes a bus buffer 1741 connected to the SDRAM module 23a, and a bus buffer 1742 which selectively makes only one direction active. The bus buffer 1742 includes a buffer 1742a which enables a data transfer to the SDRAM module 23a and a buffer 1742b which enables a data transfer from the SDRAM module 23a. Only one of the buffers 1742a and 1742b stores data depending on the value of the selection signal + WR-SEL, thereby selectively making only the data transfer active in one direction.

Similarly, the data bus 1750 includes a signal line group 1751 connected to the SDRAM module 23a and a bus buffer 1752 which selectively makes only one direction active. The bus buffer 1752 includes a buffer 1752a which enables a data transfer to the SDRAM module 23b, and the buffer 1752b which enables the data transfer from the SDRAM module 23b. Only one of the buffers 1752a and 1752b stores data depending on the value of the selection signal + WR-SEL, thereby selectively making the data transfer in one direction active.

Each of the bus buffer 1741 and the signal line group 1751 enables the 18-bit data strobe signal and the 72-bit data signal that are to be respectively supplied to the 18 memory element 231 to be transmitted. Therefore, each of the buffers 1742a, 1742b, 1752a, and 1752b may store at least 90-bit data.

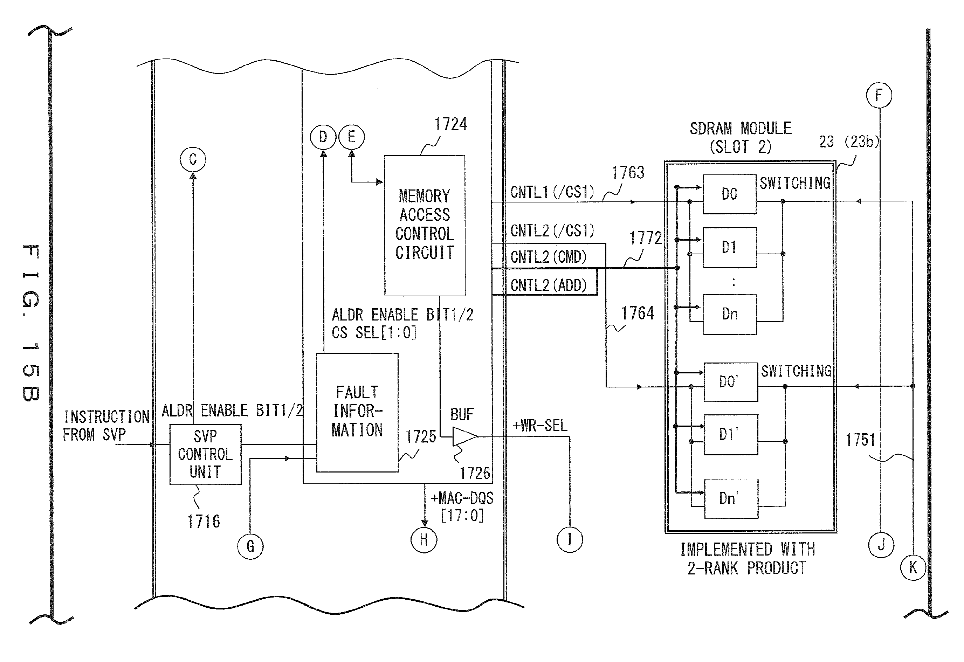

Since each rank of each SDRAM module 23 is separately used, each rank of each SDRAM module 23 is provided with a chip select signal through a different signal line. That is, the chip select signal (expressed as "CNTL1 (/CSO)" in FIG. 15A) to the rank 0 of the SDRAM module 23a is supplied to the SDRAM module 23a from the access control circuit 1712 through the signal line 1751, and the chip select signal (expressed as "CNTL2 (/CSO) " in FIG. 15A) to the rank 1 of the SDRAM module 23a is supplied from the access control circuit 1712 to the SDRAM module 23a through a signal line 1762. Similarly, the chip select signal (expressed as "CNTL1 (/CS1) " in FIG. 15B) to the rank 0 of the SDRAM module 23b is supplied from the access control circuit 1712 to the SDRAM module 23b through the signal line 1763, and the chip select signal (expressed as CNTL2 (/CS1) in FIG. 15B) to the rank 1 of the SDRAM module 23b is supplied from the access control circuit 1712 to the SDRAM module 23b through a signal line 1764. Various types of instructions to each rank of the SDRAM module 23a, various types of address signals (expressed as "CNTL1 (CMD) " and "CNTL1 (ADD) " in FIG. 15A), etc. are supplied to the SDRAM module 23a through signal line group 1771. Similarly, various types of instructions to each rank of the SDRAM module 23b, various types of address signals ("CNTL2 (CMD)" in FIG. 15B), etc. are supplied to the SDRAM module 23b through the signal line group 1772.

As described above, the chip select signals respectively supplied to the rank 0 of the SDRAM modules 23a and 23b are expressed as "CNTL1 (/CSO) " and "CNTL1 (/CS1) " . In the second embodiment, the "CNTL1" indicates the combination of the ranks between different SDRAM modules 23, "CS0" and "CS1" respectively indicate a normal side rank and a redundancy side rank. This holds true with "CNTL2 (/CSO)" and "CNTL2 (/CS1)". Afterwards, for convenience, the combination expressed as "CNTL1" is referred to as a "first combination", and the combination expressed as "CNTL2" is referred to as a "second combination"

Since there are two combinations of ranks using two SDRAM modules 23, the address data + MAC-ADD [29] in the address data + MAC-ADD [30:29], that is, the chip select data +CS-ADD [0], is used in the second embodiment. The first and second combinations are specified when the value of the chip select data +CS-ADD [0] is 0 and 1 respectively. The first and second combinations are not simultaneously specified.

The storage processing device 1710 according to the second embodiment includes an input circuit 1711, the access control circuit 1712, a data switch circuit 1713, an input circuit 1714, an ECC unit 1715, and an SVP control unit 1716. Among these components, the access control circuit 1712 and the data switch circuit 1713 are different from those in the first embodiment. Thus, the access control circuit 1712 and the data switch circuit 1713 are considered in the explanation of the configurations and the operations illustrated in FIGS. 15A through 15C.

The data switch circuit 1713 includes a register 1731, two buffers 1732 and 1733, an OR gate group 1734, and a register group 1735.

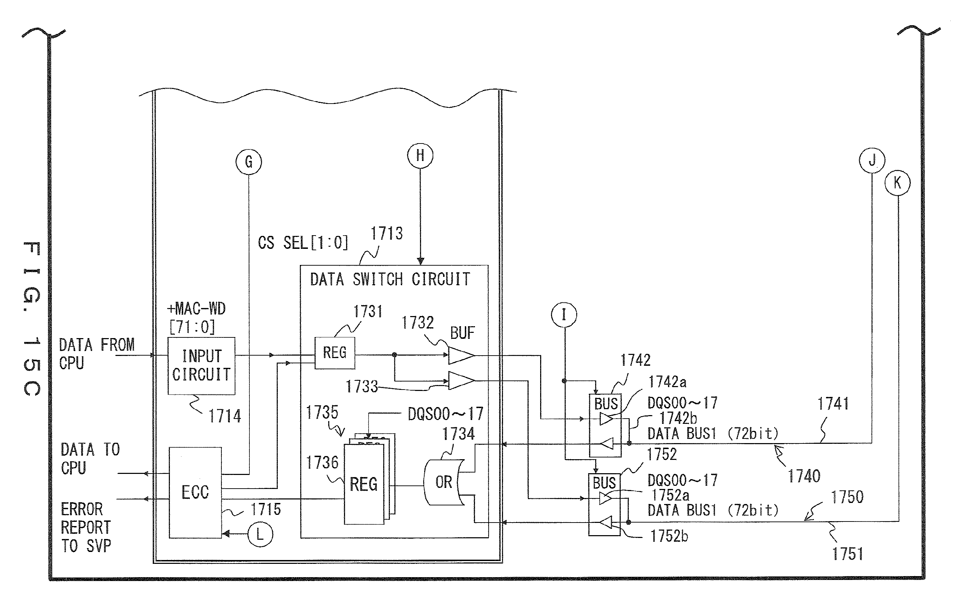

The register 1731 inputs 72-bit data signal from the input circuit 1714. Thus, the 1731 may store data of at least 72 bits (expressed as +MAC-WD in FIG. 15C). The data stored in the register 1731 is output to the buffers 1732 and 1733, and is held in each of the buffers 1732 and 1733. The buffers 1732 and 1733 hold 18-bit data strobe information (expressed as +MAC-DQS [17:0] in FIG. 15B) output by the access control circuit 1712 in addition to the data output from the register 1731. Each of the buffers 1732 and 1733 holds the data of at least 90 bits. The data held in the buffers 1732 and 1733 is output to the data bus 1740 and 1750 respectively.

The data buses 1740 and 1750 enable the same direction depending on the value of the selection signal + WR-SEL output from the access control circuit 1712. During write access, the 90-bit signals, that is, a 18-bit data strobe signal and a 72-bit data signal, are output to each of the bus buffer groups 1741 and 1751. Therefore, data may be simultaneously stored to each rank of two different SDRAM modules 23a and 23b. Since data may be simultaneously stored in each rank of two different SDRAM modules 23a and 23b, the reduction of access speed due to the combination of ranks specified from two different SDRAM modules 23a and 23b may be avoided. On the other hand, during read access, a 90-bit signal which is read from the SDRAM module 23 and propagates through the data buses 1740 and 1750 is output to the data switch circuit 1713.

The OR gate group 1734 includes at least 90 OR gates. The 90-bit signals output to the data switch circuit 1713 are separated into each bit, and supplied to the corresponding OR gate. Each OR gate inputs 1-bit signal (data) from the data buses 1740 and 1750, and outputs a logical sum.

The register group 1735 includes at least 18 registers 1736. The logical sum output by each OR gate is supplied to the register 1736 corresponding to each OR gate. The logical sum output by each OR gate is used as the data signal from the SDRAM module 23. Each register 1736 configuring the register group 1735 stores 4-bit data when operating signals, that is, the data strobe signals DQS00 through DQS 17, are active. Thus, the register group 1735 holds 72-bit data. The 72-bit data held by the register group 1735 is output to the ECC unit 1715.

Using 8-bit ECC data in the 72-bit data output from the register group 1735, the ECC unit 1715 detects an error which has occurred in the data of the remaining 64 bits. Upon detection of an error, the ECC unit 1715 generates an error report indicating the contents of the error and the fault information CS SEL [1:0], and outputs them to the external control unit 4 and the access control circuit 1712 respectively. The error is not limited to a correctable error. That is, it may be an uncorrectable error.

By the output of the error report, the operator of the console 3 recognizes the occurrence of an error through the SPC 41. Upon recognition of the occurrence of the error, the operator sets the fault information ALDR ENABLE BIT 1 and ALDR ENABLE BIT 2. The set fault information ALDR ENABLE BIT 1 and ALDR ENABLE BIT 2 are output to the SVP control unit 1716, and stored in a fixed information storage unit 1725 of the access control circuit 1712 through the SVP control unit 1716.

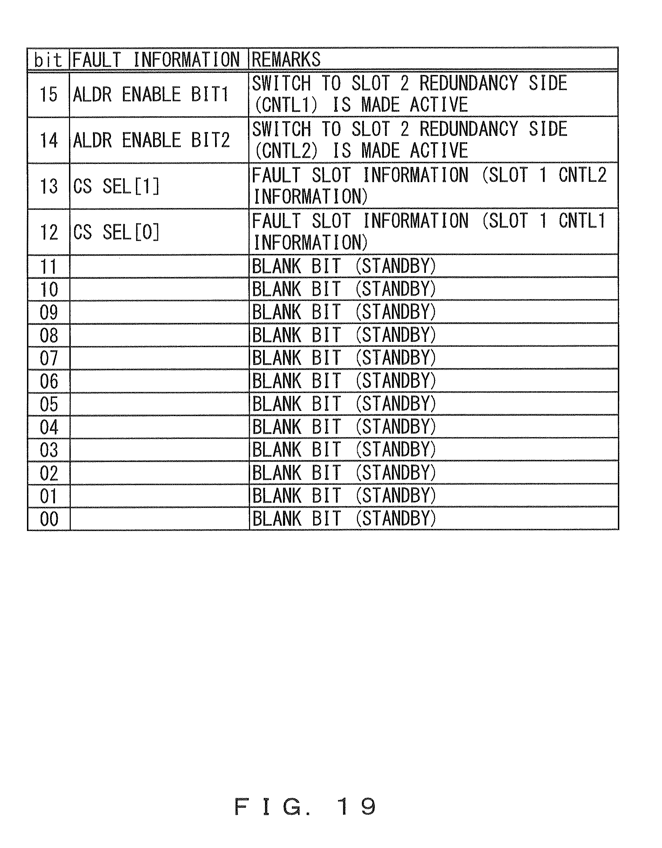

FIG. 19 is an explanatory view of the meaning of each type of fixed information according to the second embodiment of the present invention. The fault information CS SEL [1:0] indicates the position where an error (fault) has been detected. The fault information CS SEL [0] indicates whether or not a fault has been detected in the rank 0 of the SDRAM module 23a. For example, when the value of the CS SEL [0] is the logical value of 0, it indicates that no error has been detected in the rank 0 of the SDRAM module 23a (slot 1). The logical value of 1 indicates that an error has been detected in the rank 0 of the SDRAM module 23a (slot 1). Similarly, the fault information CS SEL [1] indicates whether or not a fault has been detected in the rank 1 of the SDRAM module 23a. For example, when the value of the CS SEL [1] is the logical value of 0, it indicates that no error has been detected in the rank 1 of the SDRAM module 23a (slot 1). The logical value of 1 indicates that an error has been detected in the rank 1 of the SDRAM module 23a (slot 1).

The fault information ALDR ENABLE BIT 1 and ALDR ENABLE BIT 2 indicates whether or not a switch to the redundancy side is active for each rank. The fault information ALDR ENABLE BIT 1 indicates whether or not a switch to the rank 0 of the SDRAM module 23b is active. When the value of the ALDR ENABLE BIT 1 is 0, the switch to the rank 0 of the SDRAM module 23b is inactive. When the value of the ALDR ENABLE BIT 1 is 1, the switch to the rank 0 of the SDRAM module 23b is active. Similarly, the fault information ALDR ENABLE BIT 2 indicates whether or not the switch to the rank 1 of the SDRAM module 23b is active. When the ALDR ENABLE BIT 2 is 0, the switch to the rank 1 of the SDRAM module 23b is inactive. When the ALDR ENABLE BIT 2 is 1, the switch to the rank 1 of the SDRAM module 23b is active.

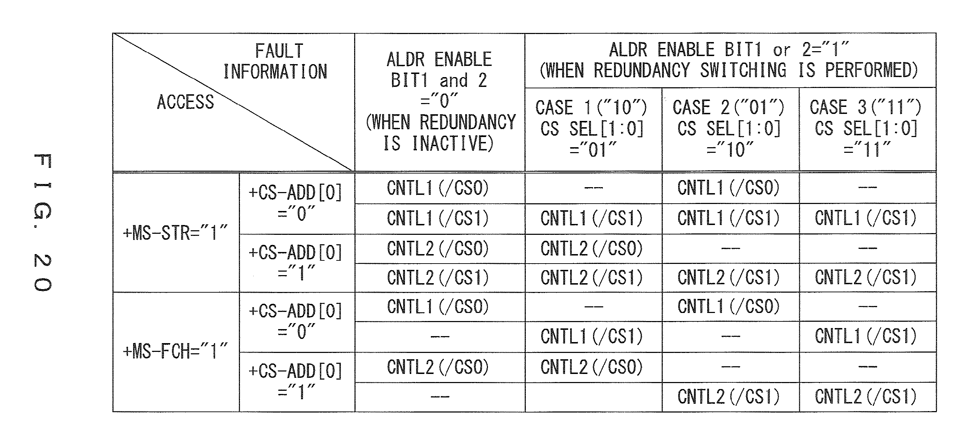

FIG. 20 is an explanatory view of the operation of the CS address conversion circuit according to the second embodiment of the present invention. The operation of a CS address conversion circuit 1723 expresses in a table format (conversion table) the chip select signal which is made active by the CS address conversion circuit 1723 according to the contents of various types of input information. Since the meanings of "+MS-STR", "+MS-FCH", "CNTL1 (CSO) ", "CNTL1 (CS1)", and "+CS-ADD [0] " expressed in FIG. 20 are described above, the detailed descriptions of them are omitted here. The "case 1" through "case 3" are described later.

As illustrated in FIG. 20, when the values of the fault information ALDR ENABLE BIT 1 and ALDR ENABLE BIT 2 are 0, that is, when redundancy is inactive, the chip select signal for write access is active on the normal side and the redundancy side corresponding to the value of the chip select data +CS-ADD [0]. The chip select signal for read access is valid only on the normal side corresponding to the value of the chip select data +CS-ADD [0]. The write access is performed on both normal and redundancy sides, and the read access is performed only on the normal side.

When redundancy switching is performed, at least one of the values of the fault information ALDR ENABLE BIT 1 and ALDR ENABLE BIT 2 is set to 1. When redundancy switching is performed, the chip select signal is valid as follows depending on the situation. The description is given concretely below for each situation.

The situation is defined depending on the type of valid instruction, that is, whether or not the instruction + MS-STR is valid, and based on the bit indicating the value of 1 in the fault information CS SEL [1:0]. In the second embodiment, in addition to the definition above, the situation may be also defined depending on the position where an error is detected.

In the second embodiment, it is assumed that the position where an error is detected may be the rank 0 (case 1) of the SDRAM module 23a and the rank 1 (case 2) of the SDRAM module 23a, that is, there are two cases. Each case may be caused by, in addition to a fault of at least one of the memory elements 231 which configures a corresponding rank, a fault of a signal line which supplies a signal to the rank. For example, the case 1 may also be caused by a fault of a signal line 1761 which supplies a chip select signal to the rank 0 of the SDRAM module 23a. Similarly, the case 2 may also be caused by a fault of a signal line 1762 which supplies a chip select signal to the rank 1 of the SDRAM module 23a. When there occurs a fault in the bus buffer 1741 of the data bus 1740, both of cases 1 and 2 occur. Similarly, when there occurs a fault in the signal line group 1771 which supplies various instructions and various address signals to each rank of the SDRAM module 23a, both of cases 1 and 2 occur. The faults above cause an error.

Similarly in the other SDRAM module 23b, an error occurs by a fault of a signal line or a signal line group. If any fault occurs in any of a signal line 1763 which supplies a chip select signal to the rank 0, the signal line 1764 which supplies a chip select signal to the rank 1, the signal line group 1751 of the data bus 1750, and the signal line group 1772 which supplies various instructions and various address signals to each rank of the SDRAM module 23b, then there occurs an error in the data read from the rank 0 or 1 of the SDRAM module 23b.

In the second embodiment, when an error is detected when redundancy is inactive, the value of one of the fault information ALDR ENABLE BIT 1 and ALDR ENABLE BIT 2 is set to 1 depending on the rank of the SDRAM module 23a in which the error has been detected, thereby switching to active redundancy. If an error is detected again after redundancy becomes active, the value of the other of the fault information ALDR ENABLE BIT 1 and ALDR ENABLE BIT 2 is set to 1. Therefore, when each value of the fault information ALDR ENABLE BIT 1 and 2 is 1, the combination of the values is "01" or "10". When the next error is detected, an error is detected in both ranks of the SDRAM module 23a. A "case 3" refers to the situation in which the values of the fault information ALDR ENABLE BIT 1 and 2 are set to 1.

When an error is detected from the data read from the rank 0of the SDRAM module 23a (corresponding to the case 1), the ECCunit 1715 sets "01" as the fault information CS SEL [1:0] . In this case, "10" is set by the operator as the fault information ALDR ENABLE BIT 1 and ALDR ENABLE BIT 2.

Similarly, when an error is detected from the data read from the rank 1 of the SDRAM module 23a (corresponding to the case 2) , the ECC unit 1715 sets "10" as the fault information CS SEL [1:0]. "01" is set by the operator as the fault information ALDR ENABLE BIT 1 and ALDR ENABLE BIT 2.

If an error is detected from the data read from any rank of the SDRAM module 23 after setting "01" or "10" as the fault information CS SEL [1:0], the ECC unit 1715 sets "11" as the fault information CS SEL [1:0]. In addition, "11" is set by the operator as the fault information ALDR ENABLE BIT 1 and ALDR ENABLE BIT 2.

In the second embodiment, the ranks of the normal side and the redundancy side are combined between different SDRAM modules 23 so that higher reliability may be realized. For example, as with the first embodiment, when the rank 0 of the SDRAM module 23a is the normal side, and the rank 1 of the SDRAM module 23a is the redundancy side, the data stored in the SDRAM module 23a by the fault of the signal line 1761 or 1762, or the signal line group 1771 or 1741 is practically lost. However, if the redundancy side is the rank 0 of the SDRAM module 23b, the loss of data may be avoided although a fault occurs in any of the signal lines 1761 and 1762, and the signal line groups 1771 and bus buffer 1741. Therefore, higher reliability is realized. Connecting different signal lines and signal line groups to the SDRAM module 23 on the normal side and the redundancy side is highly effective in realizing higher reliability.

An error may be caused by a fault in any signal line and signal line group which are necessary for access. It indicates that a fault which requires active redundancy is not limited to a fault which has occurred in any memory element 231. A fault of a setting in making redundancy active is not limited to a fault which causes a correctable error in the memory element 231. That is, the fault is to include a fault in a hardware signal line group including each signal line and a signal line group necessary for access to the memory element 231.

According to the second embodiment, the number of the ranks on the redundancy side of each combination is one. Therefore, a uncorrectable error which has occurred in the rank on the redundancy side, that is, the case 3, is practically is not to be handled for the following reason.

In the second embodiment, the corresponding error is an uncorrectable error, and the occurrence or the uncorrectable error disables switching from inactive redundancy to active redundancy. In the state in which switching is performed to active redundancy in the case 1 or 2, complete data is stored only in the rank on the redundancy side, and a memory patrol is performed only for the rank on the redundancy side. Therefore, the occurrence of an uncorrectable error in the rank on the redundancy side indicates that correct data is not read from the rank on the redundancy side. Therefore, in the case 3 in which an uncorrectable error occurs after redundancy becomes active, correct data is not read from the rank on the redundancy side, thereby losing data. To avoid losing data, an error which has occurred in one rank on the redundancy side may be handled by preparing two or more ranks on the redundancy side for each combination or by preparing one or more shared ranks available s a redundancy side for each rank.

As described above, the occurrences of errors are divided into 3 cases according to the second embodiment. Thus, the chip select signal active in each of the cases 1 through3 is described below concretely with reference to FIG. 20 for each type of active instruction and each value of chip select data +CS-ADD [0].

First, the chip select signal which is active when the instruction + MS-STR is active and the value of the chip select data +CS-ADD [0] is active is described below. In this case, it is assumed that the chip select signal CNTL1 (/CS1) which is supplied to the rank 0 of the SDRAM module 23b in all of the cases 1 through 3 is active. It is assumed that the chip select signal CNTL1 (/CS1) supplied to the rank 0 of the SDRAM module 23b in the case 3 is active because it is assumed that the chip select signal CNTL1 (/CS1) supplied to the rank 0 of the SDRAM module 23b is active in any of the cases 1 and 2. That is, in the situation in the case 3, the latest data is stored in the rank 0 of the SDRAM module 23b. In the case 2, it is assumed that the chip select signal CNTL1 (/CSO) supplied to the rank 0 of the SDRAM module 23a is also active because no error is detected in the rank 0 of the SDRAM module 23a in the case 2.

When the instruction + MS-STR is active, and the value of the chip select data +CS-ADD [0] is 1, it is assumed that the chip select signal CNTL2 (/CS1) supplied to the rank 1 of the SDRAM module 23b is active in all of the cases 1 through 3. It is assumed that the chip select signal CNTL2 (/CS1) supplied to the rank 1 of the SDRAM module 23b in the case 3 is active because it is assumed that the chip select signal CNTL2 (/CS1) supplied to the rank 0 of the SDRAM module 23b is active in any of the cases 1 and 2. In the case 1, it is assumed that the chip select signal CNTL2 (/CSO) supplied to the rank 1 of the SDRAM module 23a is also active because no error is detected in the rank 1 of the SDRAM module 23a in the case 1.

When the instruction + MS-STR is inactive, that is, the instruction + MS-FCH is active, and the value of the chip select data +CS-ADD [0] is 0, the chip select signal which is supplied to the rank 1 of the SDRAM module 23b in the case 1 is active because an error has been detected in the rank 0 of the SDRAM module 23a as the normal side. Similarly, the chip select signal CNTL1 (/CSO) of the rank 0 of the SDRAM module 23a in the case 2, and the chip select signal CNTL1 (/CS1) of the rank 1 of the SDRAM module 23b in the case 3 are active.

When the instruction + MS-FCH is active, and the value of the chip select data +CS-ADD [0] is 1, the chip select signal which is supplied to the rank 1 of the SDRAM module 23a is active in the case 1 because an error has been detected in the rank 1 of the SDRAM module 23a as the normal side. In the cases 2 and 3, the chip select signal CNTL2 (/CS1) of the rank 1 of the SDRAM module 23b is active.

As described above, when the instruction + MS-FCH is active, it is assumed that the chip select signal is active depending on the case and the value of the chip select data +CS-ADD [0]. The chip select signal which is active is supplied to the rank of the SDRAM module 23 in which data is stored.

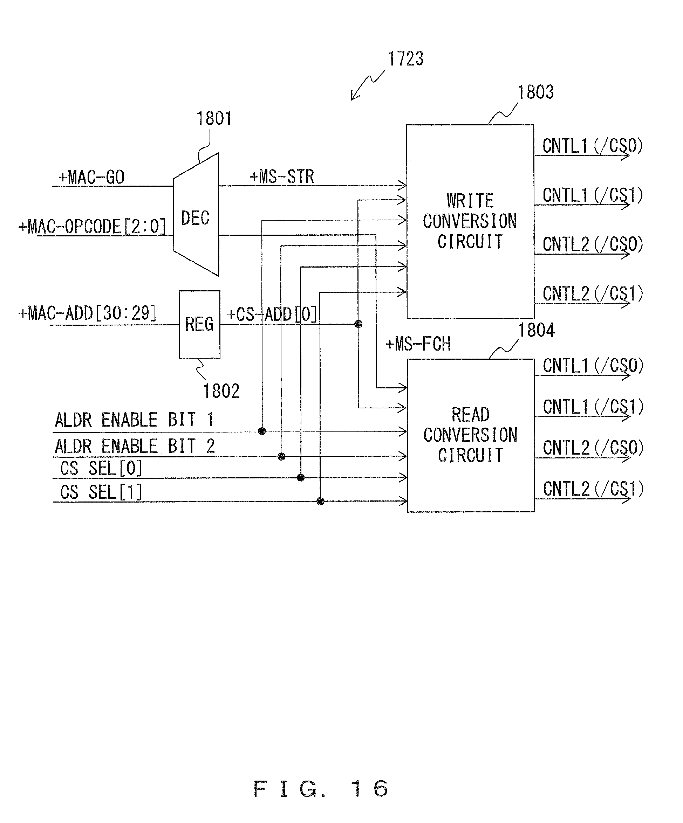

FIG. 16 is an explanatory view of the configuration of the CS address conversion circuit according to the second embodiment of the present invention. As illustrated in FIG. 16, the CS address conversion circuit 1723 according to the second embodiment includes a decoder 1801, a register 1802, a write conversion circuit 1803, and a read conversion circuit 1804. The decoder 1801 inputs the activation data + MAC-GO and the operation code + MAC-OPCODE. When the activation data + MAC-GO is active, the decoder 1801 decodes the operation code + MAC-OPCODE. The decoder 1801 makes one of the instruction + MS-STR and + MS-FCH active, that is, sets the logical value to 1. The register 1802 stores the address data + MAC-ADD [30:29]. The write conversion circuit 1803 inputs the instruction + MS-STR from the decoder 1801the address data + MAC-ADD [29], that is, the chip select data +CS-ADD [0], and the fault information ALDR ENABLE BIT 1, ALDR ENABLE BIT 2, and CS SEL [1:0] from the fault information storage unit 1725. Using the input data, the chip select signal during write access is generated.

The read conversion circuit 1804 inputs the instruction + MS-FCH from the decoder 1801, the chip select data +CS-ADD [0] from the register 1802, and each piece of fault information from the fault information storage unit 1725. Thus, the chip select signal during read access is generated using the input data.

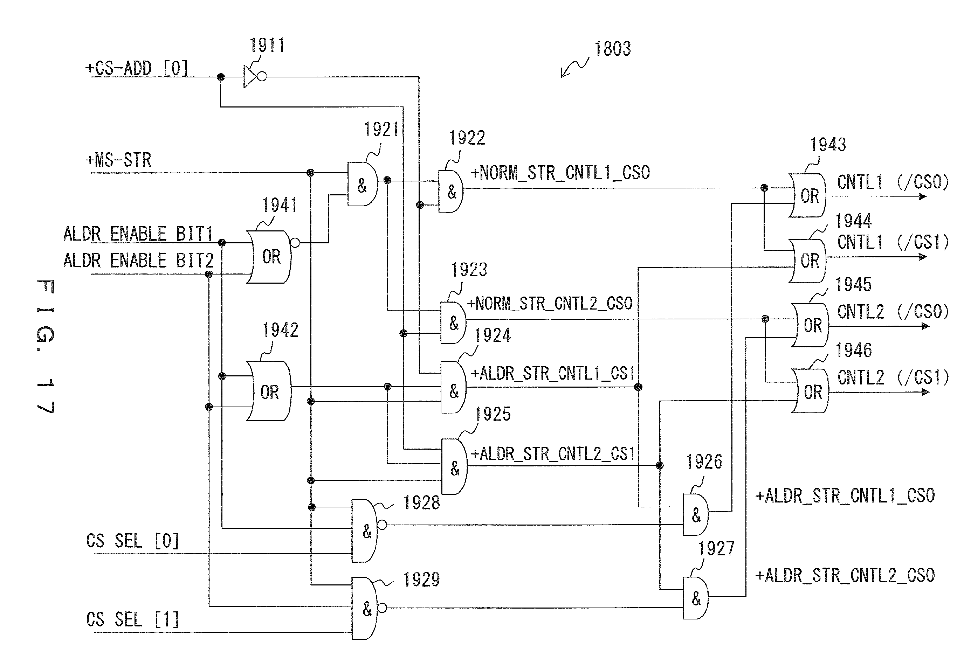

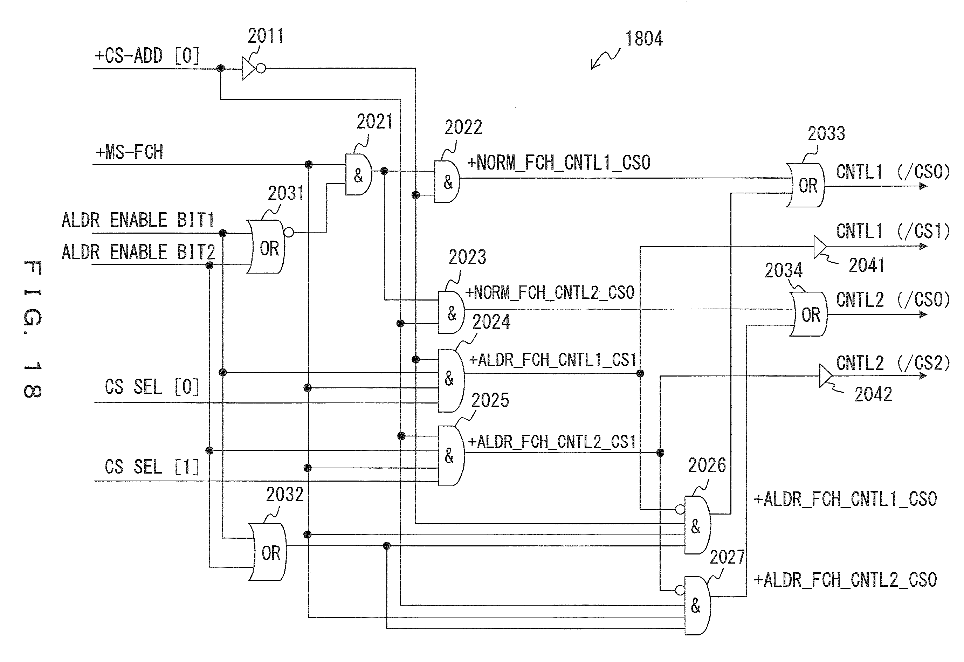

The configurations of the write conversion circuit 1803 and the read conversion circuit 1804 are concretely described below with reference to FIGS. 17 and 18.

FIG. 17 is an explanatory view of the configuration of a write conversion circuit.
The write conversion circuit 1803 in FIG. 17 is configured by a NOT gate 1911, seven AND gates 1921 through 1927, two NAND gates 1928 and 1929, one NOR gate 1941, and five OR gates 1942 through 1946. The detailed configurations and their operations are described depending on each value of the chip select data +CS-ADD [0].

First, the configuration and its operation when the value of the chip select data +CS-ADD [0] is 0 are described below.

The fault information ALDR ENABLE BIT 1 and ALDR ENABLE BIT 2 are input to the NOR gate 1941. The NOR gate 1941 outputs the NOR operation f the input information. The value of the NOR operation output by the NOR gate 1941 is 1 only when redundancy is inactive, that is, the values of the ALDR ENABLE BIT 1 and ALDR ENABLE BIT 2 are 0.

The NOR operation output from the NOR gate 1941 is input to the AND gate 1921. The AND gate 1921 outputs a logical product of the NOR operation input from the NOR gate 1941 and the instruction + MS-STR. During write access, the value of the instruction + MS-STR is 1. Therefore, when redundancy is inactive, the value of the logical value output from the AND gate 1921 is 1.

The logical product output from the AND gate 1921 is input to the AND gate 1922. In addition to the logical product input from the AND gate 1921, the AND gate 1922 inputs the negation of the chip select data +CS-ADD [0] from the NOT gate 1911. The AND gate 1922 outputs the logical product from the AND gate 1921 and the logical product (expressed by "+NORM_STR_CNTL1_CS0" in FIG. 17) of the negation of the chip select data +CS-ADD [0]. The logical product NORM_STR_CNTL1_CS0 output by the AND gate 1922 is output to the OR gates 1943 and 1944. The logical sum of the logical product NORM_STR_GNTL1_CS0 output by the OR gate 1943 and the logical product + NORM_STR_CNTL2_CS0 output by the CS address conversion circuit 1723 is the chip select signal CNTL1 (/CSO) supplied to the rank 0 of the SDRAM module 23a. The logical sum of the logical product NORM_STR_CNTL1_CS0 output by the OR gate 1944 and the logical product ALDR_STR_CNTL1_CS1 output by the AND gate 1724 is the chip select signal CNTL1 (/CS1) supplied to the rank 0 of the SDRAM module 23b. Therefore, when the value of the chip select data +CS-ADD [0] is 0, and when redundancy is inactive, the chip select signals supplied to the ranks 0 of the SDRAM modules 23a and 23b are active.

When redundancy switching is performed, at least one of the fault information ALDR ENABLE BIT 1 and the ALDR ENABLE BIT 2 is 1. Therefore, the value of the logical product output by the AND gate 1922 is 0.

The OR gate 1942 inputs the fault information ALDR ENABLE BIT 1 and the ALDR ENABLE BIT 2, and outputs the logical sum of them. The logical sum output by the OR gate 1942 is input to the AND gate 1924 (when the ALDR ENABLE BIT 1 or ALDR ENABLE BIT 2 is "1" , and when redundancy switching is performed, the output of the OR gate 1942 is "1"). In addition to the logical sum from the OR gate 1942, the AND gate 1924 inputs the negation of the chip select data +CS-ADD [0] , and the instruction + MS-STR, and outputs the logical product of them (expressed as "+ ALDR_STR_CNTL1_CS1"). The value of the logical product ALDR_STR_CNTL1_CS1 is 1 when the value of the chip select data +CS-ADD [0] is 0.

The logical product output by the AND gate 1924 is output to the OR gate 1944. Therefore, although redundancy switching is active by any of the cases 1 through 3, the chip select signal CNTL1 (/CS1) supplied to the rank 0 of the SDRAM module 23b is active.

The logical product output by the AND gate 1924 is also input to the AND gate 1926. The AND gate 1926 inputs the NAND operation of the instruction + MS-DTR, the fault information ALDR ENABLE BIT 1, and the CS SEL [0] output by the NAND gate 1928, and outputs the logical product (expressed as "+ALDR_STR_CNTL1_CS1" in FIG. 17) with the logical product from the AND gate 1924 to the OR gate 1943.

The NAND gate 1928 inputs the instruction + MS-STR, the fault information ALDR ENABLE BIT 1, and the fault information CS SEL [0], and outputs the NAND operation of them. The value of the NAND operation output by the NAND gate 1928 is 1 in the case 2 in which the values of the fault information ALDR ENABLE BIT 1 and the fault information CS SEL [0] are 0. Thus, in the case 2, the chip select signal supplied to the rank 0 of the SDRAM module 23a is active. On the other hand, in the cases 1 and 3, since the fault information CS SEL [0] is 1, the chip select signal supplied to the rank 0 of the SDRAM module 23a is inactive.

Thus, when the value of the chip select data +CS-ADD [0] is 0, the chip select signal is active based on the conversion table in FIG. 20. When the value of the chip select data +CS-ADD [0] is 1, the chip select signal is active based on the conversion table illustrated in FIG. 20.

The AND gate 1923 inputs the chip select data +CS-ADD [0] and the logical product output by the AND gate 1921, and outputs the logical product of them (expressed as "+NORM_STR_CNTL2_CS0" in FIG. 17). The logical product output by the AND gate 1923 is output to the OR gates 1945 and 1946.

The logical sum output by the OR gate 1945 is a chip select signal CNTL2 (/CSO) supplied to the rank 1 of the SDRAM module 23a. The logical sum output by the OR gate 1946 is the chip select signal CNTL2 (/CS1) supplied to the rank 1 of the SDRAM module 23b. Therefore, when the value of the chip select data +CS-ADD [0] is 1, and when redundancy is inactive, the chip select signal supplied to the rank 1 of the SDRAM modules 23a and 23b is active.

When redundancy switching is performed, at least one of the fault information ALDR ENABLE BIT 1 and ALDR ENABLE BIT 2 is 1. Therefore, the value of the logical product output by the AND gate 1923 is 0 constantly.

The chip select data +CS-ADD [0] is input to the AND gate 1925. In addition to the CS-ADD [0], the AND gate 1925 inputs the logical sum of the OR gate 1942 and the instruction + MS-STR, and outputs the logical product of them (expressed as "+ ALDR_STR_CNTL2_CS1" in FIG. 17). Therefore, the value of the logical value output by the AND gate 1925 is constantly 1 when the value of the chip select data +CS-ADD [0] is 1 and when redundancy switching is performed. The logical product of the AND gate 1925 is output to the OR gate 1946. Therefore, in any of the cases 1 through 3, the chip select signal supplied to the rank 1 of the SDRAM module 23b is active.

The logical product output by the AND gate 1925 is also input to the AND gate 1927. The AND gate 1927 inputs the NAND operation output by the NAND gate 1929, and outputs the logical product (expressed as "+ ALDR_STR_CNTL2_CS0" in FIG. 17) with the logical product from the AND gate 1925 to the OR gate 1945.

The NAND gate 1929 inputs the instruction + MS-STR, the fault information ALDR ENABLE BIT 2, and the fault information CS SEL [1], and output the NAND operation of them. Therefore, the value of the NAND operation of the NAND gate 1929 is 0 in the cases 2 and 3 when the values of the fault information ALDR ENABLE BIT 2, and the fault information CS SEL [1] are 1. That is, the value of the NAND operation of the NAND gate 1929 is 1 only in the case 1. As a result, the chip select signal supplied to the rank 1 of the SDRAM module 23a only in the case 1 is active. Thus, even when the value of the chip select data +CS-ADD [0] is 1, the chip select signal is active according to the conversion table illustrated in FIG. 20.

When the value of the chip select data +CS-ADD [0] is 1, each logical product of the AND gates 1922, 1924, and 1926 is constantly 0. Therefore, when the value of the chip select data +CS-ADD [0] is 1, the chip select signal of each rank 0 of the SDRAM modules 23a and 23b is not active. Similarly, when the value of the chip select data +CS-ADD [0] is 0, each logical value of the AND gates 1923, 1925, and 1927 is constantly 0. Therefore, when the value of the chip select data +CS-ADD [0] is 0, the chip select signal of each rank 1 of the SDRAM modules 23a and 23b is not active.

FIG. 18 is an explanatory view of the configuration of a read conversion circuit. Next, the configuration of the read conversion circuit 1804 is described in detail with reference to FIG. 18.

The read conversion circuit 1804 is configured by a NOT gate 2011, seven AND gates 2021 through 2027, a NOR gate 2031, three OR gates 2032 through 2034, and two buffers 2041 and 2042. The concrete configuration and operation of the read conversion circuit 1804 are described separately for each value of the chip select data +CS-ADD [0].

First described below in detail are the configuration and operation corresponding to the case in which the value of the chip select data +CS-ADD [0] is 0.

The fault information ALDR ENABLE BIT 1 and ALDR ENABLE BIT 2 are input to the NOR gate 2031. The NOR gate 2031 outputs the NOR operation of the input fault information. The value of the NOR operation output by the NOR gate 2031 is 1 only when redundancy is inactive.

The NOR operation from the NOR gate 2031 is input to the AND gate 2021. The AND gate 2021 outputs a logical product of the NOR operation from the NOR gate 2031 and the instruction + MS-FCH. During read access, the value of the instruction + MS-FCH is 1. Therefore, when redundancy is inactive, the value of the logical product of the NOR gate 2031 is 1.

The logical product of the NOR gate 2031 is input to the AND gate 2022. In addition to the logical product from the NOR gate 2031, the AND gate 2022 inputs the negation of the chip select data +CS-ADD [0] from the NOT gate 2011. Thus, the AND gate 2022 outputs the logical product of the AND gate 2021 and the logical product (expressed as "+NORM_FCH_GNTL1_CS0" in FIG. 18) of the negation of the chip select data +CS-ADD [0]. The logical product output by the AND gate 2022 is output to the OR gate 2033. The logical sum output by the OR gate 2033 is a chip select signal CNTL1 (/CSO) supplied to the rank 0 of the SDRAM module 23a. When the value of the chip select data +CS-ADD [0] is 0 and when redundancy is inactive, the chip select signal supplied to the rank 0 of the SDRAM module 23a is active.

When redundancy switching is performed, at least one of the fault information ALDR ENABLE BIT 1 and ALDR ENABLE BIT 2 is 1. Therefore, the value of the logical product output by the AND gate 2022 is constantly 0.

The AND gate 2024 inputs from the NOT gate 2011 the negation of the chip select data +CS-ADD [0], the fault information ALDR ENABLE BIT 1, the instruction + MS-FCH, and the fault information CS SEL [0], and outputs the logical product (expressed as "+ALDR_FCH_CNTL1_CS1" in FIG. 18) of them. When the value of the chip select data +CS-ADD [0] is 0, the values of the fault information ALDR ENABLE BIT 1 and the fault information CS SEL [0] are to be 1 so that the value of the logical product output by the AND gate 2024 is 1. In the cases 1 and 3, the values of the fault information ALDR ENABLE BIT 1 and the fault information CS SEL [0] are 1. The logical product output by the AND gate 2024 is input to the buffer 2041. The output of the buffer 2041 is the chip select signal CNTL1 (/CS1) of the rank 0 of the SDRAM module 23b. Thus, when the value of the chip select data +CS-ADD [0] is 0, the chip select signal of the rank 0 of the SDRAM module 23b is active in the cases 1 and 3.

The OR gate 2032 inputs the fault information ALDR ENABLE BIT 1 and ALDR ENABLE BIT 2, and outputs the logical sum of them. The logical sum output by the OR gate 2032 is input to the AND gate 2026. In addition to the logical sum from the OR gate 2032, the AND gate 2026 inputs the negation of the chip select data +CS-ADD [0] from the NOT gate 2011, the negation of the logical product output by the AND gate 2024, and the instruction + MS-FCH, and outputs the logical product (expressed as "+ALDR_FCH_CNTL1_CS0") of them to the OR gate 2033. The value of the logical product output by the AND gate 2024 is 1 if the value of the logical product of the AND gate 2024 is 0 when the value of the chip select data +CS-ADD [0] is 0 and when redundancy switching is performed. The value of the logical product of the AND gate 2024 is 0 when the case 2 holds. Therefore, when the value of the chip select data +CS-ADD [0] is 0, the chip select signal CNTL1 (/CSO) of the rank 0 of the SDRAM module 23a is active.

When redundancy is inactive, the value of the fault information ALDR ENABLE BIT 1 is 0. Therefore, the value of the logical product of the AND gate 2024 is 0, and the chip select signal CNTL1 (/CS1) of the rank 0 of the SDRAM module 23b is active. Furthermore, when redundancy switching is performed in the cases 1 and 3, the value of the logical product output by the AND gate 2024 is 1. Accordingly, the chip select signal CNTL1 (/CSO) of the rank 0 of the SDRAM module 23a in the case 2 is inactive.

Described below are the configuration and operation corresponding to the case in which the value of the chip select data +CS-ADD [0] is 1.

The AND gate 2023 inputs the chip select data +CS-ADD [0] and the logical product of the AND gate 2021, and outputs the logical product (expressed as "+NORM_FCH_CNTL2_CS0" in FIG. 18) of them to the OR gate 2034. The logical sum output by the OR gate 2034 is the chip select signal CNTL2 (/CSO) of the rank 1 of the SDRAM module 23a. The value of the logical product of the AND gate 2021 is 1 when redundancy is inactive. Therefore, when the value of the chip select data +CS-ADD [0] is 1 and when redundancy is inactive, the chip select signal CNTL2 (/CSO) of the rank 1 of the SDRAM module 23a is active.

The AND gate 2025 inputs the chip select data +CS-ADD [0], the fault information ALDR ENABLE BIT 2, the instruction + MS-FCH, and the fault information CS SEL [1], and outputs the logical product (expressed as "+ALDR_FCH_CNTL2_CS1" in FIG. 18) of them. When the value of the chip select signal chip select data +CS-ADD [0] is 1, the values of the fault information ALDR ENABLE BIT 2 and the fault information CS SEL [1] are to be 1 so that the value of the logical product output by the AND gate 2025 is 1. The values of the fault information ALDR ENABLE BIT 2 and the fault information CS SEL [1] are 1 in the cases 2 and 3. The logical product +ALDR_FCH_CNTL2_CS1 output by the AND gate 2025 is input to the buffer 2042. The output of the buffer 2042 is the chip select signal CNTL2 (/CS1) of the rank 1 of the SDRAM module 23b. When the value of the chip select data +CS-ADD [0] is 1, the chip select signal CNTL2 (/CS1) of the rank 1 of the SDRAM module 23b is active in the cases 2 and 3. When redundancy is inactive, and when redundancy is inactive in the case 1, the value of the fault information ALDR ENABLE BIT 2 is 0. Therefore, in each situation, the chip select signal CNTL2 (/CS1) of the rank 1 of the SDRAM module 23b is inactive.

The negation of the logical product of the AND gate 2025 is output to the AND gate 2027. In addition to the negation of the logical product of the AND gate 2025, the AND gate 2027 inputs the instruction + MS-FCH and the logical sum of the OR gate 2032, and outputs the logical product (expressed as "+ALDR_FCH_CNTL2_CS1" in FIG. 18) of them to the OR gate 2034. When the value of the chip select data +CS-ADD [0] is 1, the value of the logical product output by the AND gate 2025 is 0 in the case 1. Therefore, when the value of the chip select data +CS-ADD [0] is 1, the chip select signal (specified signal name) of the rank 1 of the SDRAM module 23a is active in the case 1. In the cases 2 and 3, the value of the logical product of the AND gate 2025 is 1, and the value of the logical product of the AND gate 2027 is 0. Therefore, in the cases 2 and 3, the chip select signal CNTL2 (/CSO) of the rank 1 of the SDRAM module 23a becomes inactive.

When the value of the chip select data +CS-ADD [0] is 1, the value of each logical sum of the AND gates 2022, 2024, and 2026 is constantly 0. Therefore, in the situation above, the chip select signal CNTL1 (/CSO), CNTL1 (/CS1) supplied to each rank 0 of the SDRAM modules 23a and 23b are not active. Similarly, when the value of the chip select data +CS-ADD [0] is 0, the value of each logical sum of the AND gates 2023, 2025, and 2027 is constantly 0. Therefore, in the situation above, the chip select signal CNTL2 (/CSO), and CNTL2 (/CS1) supplied to each rank 1 of the SDRAM modules 23a and 23b are not active. Thus, during read access, the read conversion circuit 1804, the chip select signal is made active based on the conversion table illustrated in FIG. 20.

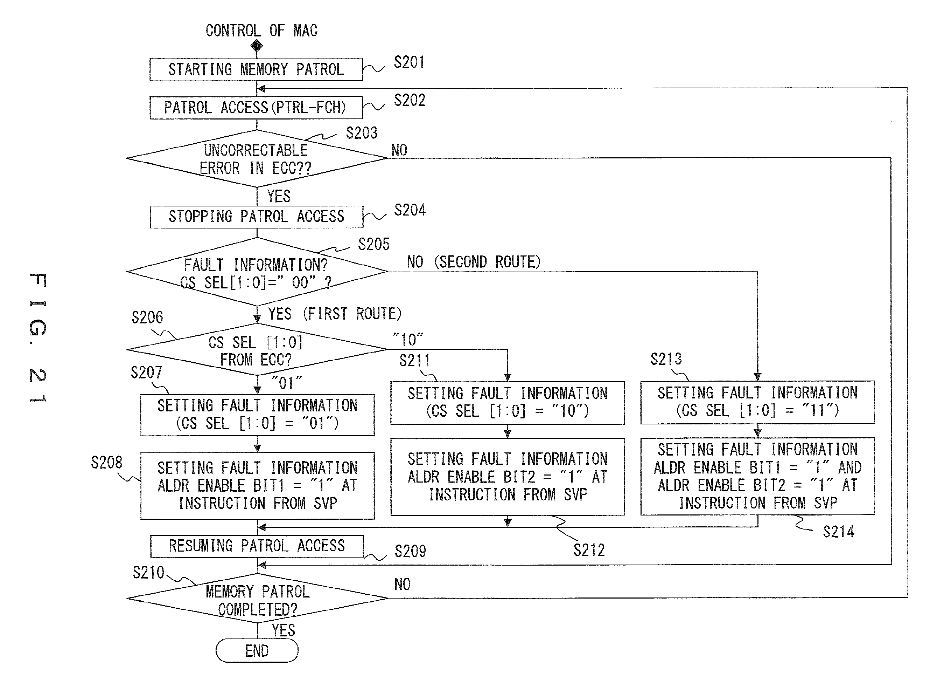

FIG. 21 is a flowchart of an example of the flow of the controlling process performed by the storage processing device according to the second embodiment for a memory patrol. Next, the operation of the storage processing device 1710 for a memory patrol is described below in detail with reference to FIG. 21. The memory patrol is started at an instruction output by the SVP 42 by the operator of the console 3.

First, in step S201, the storage processing device 1710 inputs an instruction to start the memory patrol from the SVP 42 through the SCI 43, and starts the memory patrol. The instruction to start the memory patrol is processed by the SVP control unit 1716, and the input circuit 1711 outputs the instruction for read access specified by the SVP control unit 1716. In step S202, the storage processing device 1710 performs access (read access) for the memory patrol according to the instruction output by the input circuit 1711.

The input circuit 1711 has the function of incrementing, for example, the address register for storing the address data + MAC-ADD [30:0], and the value of the address register as in the first embodiment. The input circuit 1711 generates an instruction using the value of the address register. The access by a memory patrol is realized by inputting the instruction generated using the value of the address register to the access control circuit 1712.

The data read from each memory element 231 of the rank 0 or 1 of the SDRAM module 23 by the access by the memory patrol is output to the register 1736 corresponding to the register group 1735 of the data switch circuit 1713 through the data bus 1740. The data strobe signal supplied to each memory element 231 is similarly supplied as a signal for operation to the corresponding register 1736 of the register group 1735 of the data switch circuit 1713 through the data bus 1740. Thus, each register 1736 stores the data of the corresponding memory element 231. The data of each register 1736 is output to the ECC unit 1715 for an error check. In step S203, the SVP control unit 1716 judges whether or not the ECC unit 1715 has detected an uncorrectable error. If the ECC unit 1715 detects an uncorrectable error, the information about the error is reported to the SVP control unit 1716 through, for example, the SVP 42. Therefore, the judgment in S203 is YES, and control is passed to step S204. On the other hand, unless an uncorrectable error is detected by the ECC unit 1715, the judgment in S203 is No, and control is passed to step S209.

In step S209, the SVP control unit 1716 instructs the input circuit 1711 to output an instruction to read data next (the correspondence is different from the expression in the figure). In the next step S210, the SVP control unit 1716 judges whether or not the memory patrol has been completed. The input circuit 1711 notifies the SVP control unit 1716 when and that the value of the address register becomes larger than the value determined by the SDRAM module 23. The SVP control unit 1716 instructs the input circuit 1711 to generate an instruction to alternately access the first and second combinations. If a notification is received from the input circuit, the judgment in S210 is YES, and the SVP control unit 1716 then terminates the memory patrol. On the other hand, unless the notification is received from the input circuit, the judgment in S210 is NO, and control is returned to step S202. In step S202, access is performed by a memory patrol of reading data from another combination.

In step S204, the SVP control unit 1716 stops access by the memory patrol, that is, the output of an instruction from the input circuit 1711 is stopped. In the next step S205, the SVP control unit 1716 judges whether or not the fault information CS SEL [1:0] stored in the fault information storage unit 1725 is "00". When redundancy is inactive, the value of CS SEL [1:0] is "00". When redundancy is inactive, the judgment in S205 is YES, and control is passed to step S206. The "first route" expressed in FIG. 20 indicates the detection of an error when redundancy is inactive. Unless redundancy is inactive, that is, when redundancy switching is performed, the judgment in S205 is NO, and control is passed to step S213. The "second route" expressed in FIG. 20 indicates the detection of an error after redundancy switching is performed.

In step S206, the SVP control unit 1716 judges the value of the fault information CS SEL [1:0] input by the ECC unit 1715. When the value of CS SEL [1:0] is "01", that is, an error is detected in the rank 0 of the SDRAM module 23, it is judged, and control is passed to step S207. On the other hand, when the value of CS SEL [1:0] is "10" , that is, an error is detected in the rank 0 of the SDRAM module 23, it is judged, and control is passed to step S211.

In step S207, the SVP control unit 1716 allows the fault information storage unit 1725 to store the fault information CS SEL [1:0] (each value then is "01") output by the ECC unit 1715. In the next step S208, the SVP control unit 1716 stores the fault information ALDR ENABLE BIT 1 and ALDR ENABLE BIT 2 in the fault information storage unit 1725 at the instruction output from the SVP 42 by the operation of the operator of the console 3. In this case, each value of the stored fault information ALDR ENABLE BIT 1 and ALDR ENABLE BIT 2 is "10". After the fault information ALDR ENABLE BIT 1 and ALDR ENABLE BIT 2 are completely stored, control is passed to step S209, and the SVP control unit 1716 next instructs the input circuit 1711 to output the instruction to read data. Thus, the access by a memory patrol is resumed.

On the other hand, in step S211, the SVP control unit 1716 allows the fault information storage unit 1725 to store the fault information CS SEL [1:0] (each value then is "10") output by the ECC unit 1715. In the next step S212, the SVP control unit 1716 stores the fault information ALDR ENABLE BIT 1 and ALDR ENABLE BIT 2 in the fault information storage unit 1725 at the instruction output from the SVP 42 by the operation of the operator of the console 3. In this case, each value of the fault information ALDR ENABLE BIT 1 and ALDR ENABLE BIT 2 is "01". After the fault information ALDR ENABLE BIT 1 and ALDR ENABLE BIT 2 are completely stored, control is passed to step S209.

The judgment of NO in step S205 indicates that an error has been detected in one rank of the SDRAM module 23a (the relationship with the "second route" is to be explained). In step S213 to which control is passed as a result of the judgment of NO in S205, the SVP control unit 1716 allows the fault information storage unit 1725 to store the fault information CS SEL [1:0] (each value then is "11") output by the ECC unit 1715. In the next step S214, the SVP control unit 1716 stores the fault information ALDR ENABLE BIT 1 and ALDR ENABLE BIT 2 in the fault information storage unit 1725 at the instruction output from the SVP 42 by the operation of the operator of the console 3. In this case, each value of the stored fault information ALDR ENABLE BIT 1 and ALDR ENABLE BIT 2 is "11". After the values are stored, control is passed to step S209.

Thus, in the second embodiment, the storage processing device 1710 may perform redundancy switching depending on an error when it is detected without performing rewrite access for confirmation as to whether or not the error has been caused by a correctable fixed fault because it is considered which signal line or signal line group has caused an error. A fault which has occurred in a signal line or a signal line group normally causes an error continuously. Therefore, in the second embodiment, a detected error is checked whether it is a correctable error or an uncorrectable error.

It is difficult to make a judgment as to whether an error is caused by a faulty signal line or a faulty signal line group unless a system of detecting faults of a signal line and a signal line group is well prepared. Thus, the storage processing device 1710 may perform rewrite access upon detection of an error. In addition, redundancy switching may be performed at any time other than during a memory patrol. For example, the redundancy switching at a time point other than a memory patrol may be performed under control of the SVP control unit 1716.

The position in which an error is detected after redundancy switching is a rank where no error of the SDRAM module 23a is detected, or any rank of the SDRAM module 23b. The detection of an error in any rank of the SDRAM module 23b indicates that data is not read from the last one rank in which complete data is stored. That is, it indicates the loss of data. In the second embodiment, regardless of the position where an error is detected after redundancy switching, each value of the fault information ALDR ENABLE BIT 1 and ALDR ENABLE BIT 2 is 1. However, since the detection of an error in the SDRAM module 23b indicates the loss of data, the process to be performed depending on the position where an error is detected may be changed. That is, it may be assumed that only when an error is detected from a rank of the SDRAM module 23a in which no error is detected that each value of the fault information ALDR ENABLE BIT 1 and ALDR ENABLE BIT 2 is 1. When an error is detected from any rank of the SDRAM module 23b, a message to prompt the switch of the SDRAM module 23 may be immediately output to the operator.

### <Third Embodiment>

In the first and second embodiments above, the storage processing device is realized as one component (semiconductor device), and implemented on a computer (data processing device). On the other hand, the third embodiment realizes each device other than the storage processing device as one component (semiconductor device), and implement each device on a computer.

In the third embodiment as with the first and second embodiments, the component for which it may be assumed as the same or basically the same as a component described above is assigned the same reference numeral. Thus, the third embodiment is described for different points from the second embodiment.

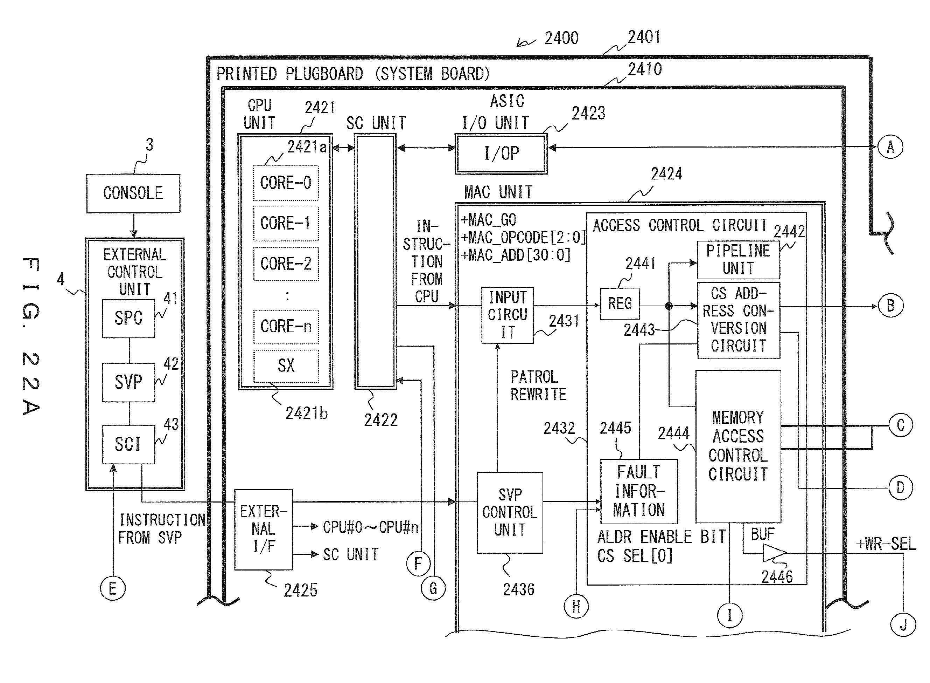

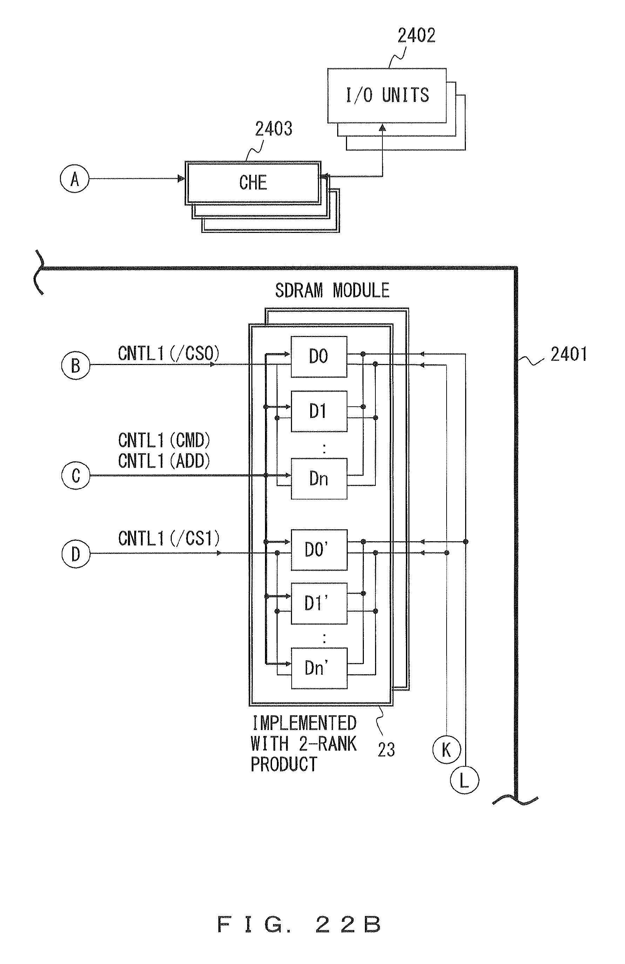

FIGS. 22A through 22C are explanatory views of the configurations of the computer system to which the storage processing device according to the third embodiment is applied. A computer system 2400 in FIGS. 22A through 22C includes a printed plugboard 2410, the console 3, the external control unit 4, a plurality of I/O units 2402, and a plurality of CHEs (channel elements) 2403.

The printed plugboard 2401 is, for example, a system board. The system board is a module loaded with a CPU and memory. The I/O units 2402 is, for example, a module provided with a storage device which stores data, and a plurality of slots. A computer configuring the computer system 2400 is realized as a server which stores one or more printed plugboards (hereafter referred to as a "system board") 2401 and I/O units 2402. The CHE 2403 is a path for realizing a data transmission at least between the system board 2401 and the I/O unit 2402, and is, for example, a cross bar.

On the system board 2401, a plurality of SDRAM modules 23 (slots), an ASIC (application specific integrated circuit) 2410, a bus 2411, and a data bus 2412. The bus 2411 and the data bus 2412 are used in the management of a data transmission between the ASIC 2410 and the SDRAM module 23.

The bus 2411 includes a signal line group 2411a and a bus buffer 2411b connected to the SDRAM module 23. The bus buffer 2411b includes a buffer 2411c storing data output from a data switch circuit 2433, and a buffer 2411d storing data output to the data switch circuit 2433. The buffer 2411c stores data output from the data switch circuit 2433 if the value of the selection information +WR-SEL is 0. The buffer 2411d stores data from the SDRAM module 23 side if the value of the selection information +WR-SEL is 1. As a result, when the value of the selection information +WR-SEL is 1, only the data output from the data switch circuit 2433 to the SDRAM module 23 is active, and when the value of the selection information +WR-SEL is 0, only the data output from the SDRAM module 23 to the data switch circuit 2433 is active. The bus 2411 makes only one direction active by the operation of the bus buffer 2411b depending on the value of the selection information +WR-SEL.

Similarly, the data bus 2412 includes a signal line group 2412a and a bus buffer 2412b connected to each rank of the SDRAM module 23. The bus buffer 2412b also includes a buffer 2412c which stores data output from the data switch circuit 2433, and a buffer 2412d which stores data read from the SDRAM module 23. The buffer 2412c stores data output from the data switch circuit 2433 if the value of the selection information +WR-SEL is 0. The buffer 2412d stores data output from the SDRAM module 23 if the value of the selection information +WR-SEL is 1. As a result, when the value of the selection information +WR-SEL is 1, only the data output from the data switch circuit 2433 to the SDRAM module 23 is active, and when the value of the selection information +WR-SEL is 0, only the data output from the SDRAM module 23 to the data switch circuit 2433 is active. The data bus 2412 makes only one direction active by the operation of the bus buffer 802b depending on the value of the selection information +WR-SEL.

The ASIC 2410 includes a CPU unit 2421, a data switch circuit 2433, an I/O unit 2423, a MAC (memory access controller) unit 2424, and an external I/F (interface) 2425. The CPU unit 2421 includes a plurality of CPU core 2421a each of which is operable as a CPU. The SC unit SC unit 2422 functions as an SC (system controller). The I/O unit 2423 is an I/OP (input output processor), and input and outputs data between the ASIC 2410 and the CHE 2403. The MAC unit 2424 functions as a storage processing device. The external I/F (interface) 2425 realizes the transmission and reception of data between the external control unit 4 and the ASIC 2410.

The ASIC 2410 with the configuration above is loaded with the CPU unit 2421, the SC unit 2422, and the MAC unit 2424, and directly accesses the SDRAM module 23 for data processing. Since the CPU unit 2421, the SC unit 2422, and the MAC unit 2424 are located in the same package (for example, on the same chip), they realize easier access and high-speed data processing as compared with the first and second embodiments in which they are located as separate parts. The data transmission among the parts which is serially performed in the first and second embodiments may be relatively easily performed in parallel in the third embodiment. Therefore, the data transmission between the SC unit 2422 and the MAC unit 2424, between the external I/F 2425 and the MAC unit 2424, etc. may be performed in parallel. In addition, since the I/O unit 2423 is also located in the same package, a necessary high-speed data transmission is more easily performed.

The hardware incorporated into the same package with the MAC unit 2424 is not limited to that described above. That is, for example, only the MAC unit 2424 and the SC unit 2422, or only the SC unit 2422 and the I/O unit 2423 may be loaded into the same package.

The MAC unit 2424 corresponds to the implementation of a plurality of SDRAM modules 23, and is connected to the SC unit 2422 and the external I/F 2425 in the ASIC 2410. As with the first and second embodiments, the MAC unit 2424 includes an input circuit 2431, an access control circuit 2432, a data switch circuit 2433, an input circuit 2434, an ECC unit 2435, and an SVP control unit 2436.

The MAC unit 2424 according to the third embodiment realizes the redundancy similar to that according to the first embodiment for each SDRAM module 23. The MAC unit 2424 handles one of the two ranks as a normal side, and the other as a redundancy side for each SDRAM module 23, and a data write performed when redundancy is inactive is made on each rank. In the third embodiment, the fault information for one SDRAM module 23 is the fault information ALDR ENABLE BIT and the CS SEL [0] as with the first embodiment.

The access control circuit 2432 includes a register 2441, a pipeline unit 2442, a CS address conversion circuit 2443, a memory access control circuit 2444, a fault information storage unit 2445, and a buffer 2446. The CS address conversion circuit 2443 reflects the fault information ALDR ENABLE BIT and the CS SEL [0] by the generation of a chip select signal for each SDRAM module 23 (refer to FIG. 11). The fault information storage unit 2445 stores the fault information ALDR ENABLE BIT and the CS SEL [0] for each SDRAM module 23 (slot).

The buffer 2446 stores the selection information +WR-SEL output by the memory access control circuit 2444. The data buses 2411 and 2412 make the same direction active according to the selection information +WR-SEL stored in the buffer 2446. The bus 2411 is used for transmission management of an 18-bit data strobe signal, and the data bus 2412 is used for transmission management of a 72-bit data signal.

The data switch circuit 2433 is a circuit for managing the output of data read from the SDRAM module 23 and the output of data to the SDRAM module 23. The data output to the SDRAM module 23 is input from the CPU core 2421a to the data switch circuit 2433 through the SC unit 2422. The data read from the SDRAM module 23 is input to the CPU unit 2421 through the data switch circuit 2433, the ECC unit 2435, and the SC unit 2422. The input circuit 2434 inputs and outputs data between the SC unit 2422 and the MAC unit 2424.

The data switch circuit 2433 includes two registers 2451 and 2452, a selector 2453, two buffers 2454 and 2455, and a register group 2456. The register group 2456 includes a register 2457 of at least the number (18 in this example. "× 18" indicates the number of memory elements 231 in addition of the number of registers of the register group 2456) of memory elements 231 configuring one rank of the SDRAM module 23.

During write access, the register 2451 stores the data output from the input circuit 2434. The register 2452 stores the data output from the ECC unit 2435. The selector 2453 selects the data stored in one of the registers 2451 and 2452, and outputs the data to the buffer 2455. The selection information for controlling the selecting operation of the selector 2453 is generated by, for example, the SVP control unit 2436.

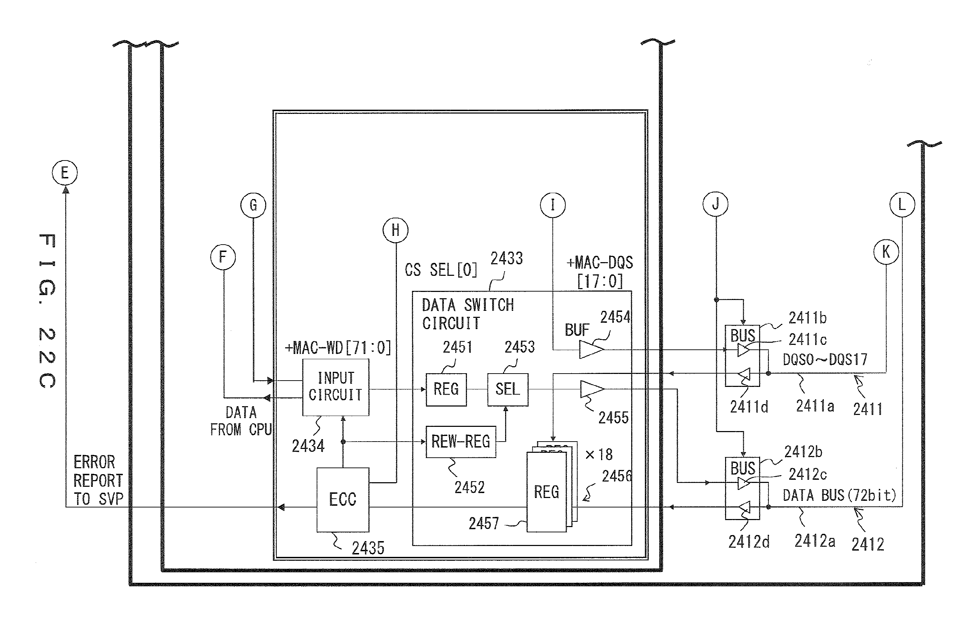

The data stored in the buffer 2455 is output to the data bus 2412 as a data signal. The buffer 2454 stores 18-bit data strobe information ("+MAC-DQS [17:0]" in FIG. 22C) output from the memory access control circuit 2444. The data strobe information is output as a data strobe signal to the bus 2411. During write access, the buses 2411 and 2412 transmit a signal output from the data switch circuit 2433. The SDRAM module 23 stores the data output from the data switch circuit 2433.

During read access, the data read from the SDRAM module 23 is input to the data switch circuit 2433 through t he data bus 2412. In addition, the data strobe signal (DQS 0 through DQS 17) supplied to the memory element 231 of the SDRAM module 23 is input to the data switch circuit 2433 through the bus 2411. The data input to the data switch circuit 2433 is divided into each memory element, and supplied to the corresponding register 2457 of the register group 2456. The 18-bit data strobe signal input to the data switch circuit 2433 is output as a signal for storage control to the corresponding register 2457. As a result, the data read from the memory element 231 of the SDRAM module 23 is stored in each corresponding register 2457.

The data stored in each register 2457 is output to the ECC unit 2435. The ECC unit 2435 inputs 72-bit data, and performs error detection. Upon detection of an error from the input data, the ECC unit generates the fault information CS SEL [0] which is an error report indicating the contents of the error. The error report is output to the external control unit 4 through, for example, the external I/F 2425. The fault information CS SEL [0] is output to the access control circuit 2432. On the other hand, when an uncorrectable error is not detected, the ECC unit 2435 outputs the input data to the input circuit 2434. The data in which no error is detected or corrected data is output to the CPU unit 2421 through the input circuit 2434 and the SC unit 2422.

When the ECC unit 2435 detects a correctable error during a memory patrol, rewrite access is performed to conform whether or not the error is caused by a fixed fault. The data output from the ECC unit 2435 during rewrite access is stored in the register 2452 of the data switch circuit 2433, and transferred to the SDRAM module 23. Thus, the rewrite access is realized.

After the data is written to the SDRAM module by the rewrite access, it is immediately read. Upon detection of an error from the data obtained by the read, the ECC unit 2435 outputs an error report about the contents of the error. The error report by the ECC unit is input to the external control unit 4 through, for example, the external I/F 2425, and the error is reported by the SVP 42 to the operator of the console 3. According to the error report, the operator sets the fault information ALDR ENABLE BIT. The set fault information ALDR ENABLE BIT is output to the external I/F 2425 and the SVP control unit 2436, and stored in the fault information storage unit 2445. The fault information CS SEL [0] output by the ECC unit 2435 is also stored in the fault information storage unit 2445. By storing these pieces of fault information, the redundancy switching is realized. The fault information CS SEL [0] is generated by the ECC unit 2435 with reference to each chip select signal output by the CS address conversion circuit 2443 as described above.

The SVP control unit 2436 performs a memory patrol using the input circuit 2431. The memory patrol is performed, for example, for each SDRAM module 23. The contents of the memory patrol performed for each SDRAM module 23 may be the same as those according to the first embodiment. Therefore, the detailed explanation is omitted.

The present embodiments (first through three embodiments) uses a 2 -rank SDRAM module as a memory module. An available memory module may be SDRAM having three or more ranks. A memory module having a plurality of selectable operation blocks (ranks in the SDRAM module) using a chip select signal etc. may be any other than the SDRAM module which may be widely adopted. As the control after redundancy switching, for example, a standby memory module is prepared, and the rank of the standby memory module is combined with the rank on the redundancy side, thereby changing from redundancy switching to inactive redundancy. By the considerations above, variations are realized in many applications.

## Claims

1. A method for memory module redundancy, comprising:
concurrently performing write access of writing data to two or more operation blocks selected from among one or more memory modules including a plurality of operation blocks which are provided with a plurality of memory elements which may be simultaneously operated; and
excluding an operation block in which a fault is detected when the fault is detected in one of the two or more operation blocks, performing access including the write access to the two or more operation blocks.

2. The method according to claim 1, wherein
the two or more operation blocks are selected from among two or more memory modules having different signal line groups through which data are read.

3. The method according to claim 2, wherein
when the two or more operation blocks are respectively selected from among two or more memory modules, and when the fault is not detected, data is input to the two or more operation blocks simultaneously through the different signal line groups.

4. The method according to claim 1, wherein
data is input to the two or more operation blocks to be accessed simultaneously through an identical signal line group.

5. A storage processing device, comprising:
a fault detection device which detects for each operation block a fault occurring in a memory module including a plurality of operation blocks having a plurality of memory elements which may be simultaneously operated;
an access execution device which concurrently performs write access by writing data to two or more operation blocks to be accessed using two or more operation blocks selected from one or more memory modules as a unit to be accessed; and
an access restriction device which restricts access including the write access by the access execution device to at least one operation block excluding an operation block in which a fault is detected among the two or more operation blocks when the fault is detected by the fault detection device in one of the two or more operation blocks to be accessed.

6. A data processing device comprising:
at least one memory module including a plurality of operation blocks provided with a plurality of memory elements which may be simultaneously operated;
an access execution device which concurrently performs write access by writing data to two or more operation blocks to be accessed using two or more operation blocks as an access target unit for access to the memory module;
a fault detection device which detects a fault occurring in the memory module for each operation block; and
an access restriction device which restricts access including the write access by the access execution device to at least one operation block excluding an operation block in which a fault is detected among two or more operation blocks when the fault detection device detects the fault in one of the two or more operation blocks to be accessed.
